# EUROPÄISCHE PATENTSCHRIFT

(11) **EP 3 551 556 B1**
(45) Veröffentlichungstag und Bekanntmachung des Hinweises auf die Patenterteilung: **05.10.2022**
(21) Anmeldenummer: 18732691.3
(22) Anmeldetag: 08.06.2018
(51) Int. Cl.: B65G 23/08, B65G 13/06, B65G 43/10, H02P 7/295

(54) **STEUERVORRICHTUNG, TRANSPORTGUTFÖRDERER UND VERFAHREN ZUM STEUERN EINES TRANSPORTGUTFÖRDERERS**
CONTROL DEVICE, GOODS TRANSPORT CONVEYOR, AND METHOD FOR CONTROLLING A GOODS TRANSPORT CONVEYOR
DISPOSITIF DE COMMANDE, CONVOYEUR DE TRANSPORT DE PRODUITS ET PROCÉDÉ DE COMMANDE D'UN CONVOYEUR DE TRANSPORT DE PRODUITS

(30) Priorität: 09.06.2017 DE 102017005494; 22.08.2017 DE 102017007923
(43) Veröffentlichungstag der Anmeldung: 16.10.2019
(73) Patentinhaber: Interroll Holding AG, 6592 Sant' Antonino (CH)
(72) Erfinder: NIU, Huiping, 41065 M nchengladbach (DE); THEIS, Normen, 76448 Durmersheim (DE)
(74) Vertreter: Kohlhof, Stephan
(86) Internationale Anmeldenummer: PCT/EP2018/065141
(87) Internationale Veröffentlichungsnummer: WO 2018/224643

(56) Entgegenhaltungen:
- EP-A1- 2 192 685
- EP-A1- 2 623 440
- JP-A- H04 119 408

## Beschreibung

Die Erfindung betrifft eine Steuervorrichtung für einen Transportgutförderer, einen Transportgutförderer und ein Verfahren zur Steuerung eines Transportgutförderers.

Transportgutförderer werden dazu verwendet, Transportgüter entlang einer vorbestimmten Transportbahn zu fördern. Transportgutförderer können eine Mehrzahl von Transportabschnitten aufweisen, in welche die Transportbahn unterteilt ist. Entlang der einzelnen Transportabschnitte können die Transportgüter in einem Stop-and-Go-Betrieb gefördert werden. Dies bedeutet, dass die einzelnen Transportabschnitte teilweise angetrieben sind, so dass sie auf ihnen befindliches Transportgut weiter fördern, und teilweise still stehen, so dass auf ihnen befindliches Transportgut nicht weitergefördert wird.

Der Stop-and-Go-Betrieb kann dazu dienen, Abstände zwischen einzelnen Transportgütern einzustellen und/oder auszubilden. Beispielsweise kann der Transportgutförderer so ausgebildet sein, dass ein Transportgut von einem ersten Transportabschnitt nur dann auf einen nachfolgenden zweiten Transportabschnitt gefördert wird, wenn der nachfolgende zweite Transportabschnitt frei von Transportgütern ist. Solange sich noch ein Transportgut im nachfolgenden Transportabschnitt befindet, wird der vorangehende, erste Transportabschnitt angehalten und die darauf befindlichen Transportgüter ebenso.

Ein solcher Transportgutförderer kann z.B. Paletten und darauf angeordnete Transportgüter fördern, also als ein Palettenförderer ausgebildet sein.

Die Transportabschnitte des Transportgutförderers können jeweils von zumindest einem Antriebsmotor angetrieben werden. Hierbei kann der Antriebsmotor insbesondere eine Antriebsrolle antreiben oder als eine solche ausgebildet sein. Dokument EP 2 192 685 A1 betrifft ein elektronisches Motorsteuergerät zur Ansteuerung eines Asynchronmotors sowie ein Verfahren zum Ansteuern eines Asynchronmotors. Um ein elektronisches Motorsteuergerät hinsichtlich einer Anlauf- und/oder Auslaufphase eines Asynchronmotors bereitzustellen, wird in dem elektronischen Motorsteuergerät ein Anlaufzeitsollwert einer Anlaufzeit und/oder ein Auslaufzeitsollwert einer Auslaufzeit des Asynchronmotors hinterlegt. Dabei weist das elektronische Motorsteuergerät einen Regler zum Regeln der Anlaufzeit auf Basis einer Anlaufzeitdifferenz einer letzten erreichten Anlaufzeit zu dem Anlaufzeitsollwert und/oder zum Regeln der Auslaufzeit auf Basis einer Auslaufzeitdifferenz einer letzten erreichten Auslaufzeit zu dem Auslaufzeitsollwert Die EP 2 192 685 A1 offenbart eine Steuervorrichtung mit einem Prozessor, der Steuersignale für zumindest einen im Stop-and-Go-Betrieb betriebenen Antriebsmotor generiert; wobei der Prozessor dazu konfiguriert ist, beim Anhalten den Antriebsmotor so mittels eines Phasenanschnitts und/oder Phasenabschnitts anzusteuern, dass das vom Antriebsmotor erzeugte Drehmoment gemäß einer einstellbaren Anhaltefunktion reduziert wird und der Prozessor die Anhaltefunktion in Abhängigkeit von detektierten Prozessdaten einstellt.

Dokument EP 2 623 440 A1 betrifft ein Verfahren zum Betreiben einer Förderanlage mit einem Gurt und mindestens einer Antriebstrommel zum Antreiben des Gurtes. Zum Verändern der Geschwindigkeit des Gurtes innerhalb eines durch eine erste Drehzahl der Antriebstrommel und eine zweite Drehzahl der Antriebstrommel definierten Zeitfensters wird das auf die Antriebstrommel wirkende Drehmoment gesteuert.

Dokument JP H04 119408 A betrifft einen Antriebsmotor für eine Förderanlage, bei der das Gewicht eines geförderten Guts detektiert wird.

Der Erfindung liegt die Aufgabe zugrunde, eine verbesserte Steuerung eines Transportgutförderers zu ermöglichen, insbesondere eine verbesserte Positionskontrolle der gefördereten Transportgüter zu ermöglichen.

Die Erfindung wird durch die Gegenstände der unabhängigen Ansprüche beschrieben. Bevorzugte Ausführungsformen sind die Gegenstände der abhängigen Ansprüche.

Ein Aspekt betrifft eine Steuervorrichtung für einen Transportgutförderer mit einem Prozessor, der Steuersignale für zumindest einen im Stop-and-Go-Betrieb betriebenen Antriebsmotor eines Transportabschnitts des Transportgutförderers generiert. Dabei ist der Prozessor dazu konfiguriert, beim Anhalten des Transportabschnitts des Transportgutförderers den Antriebsmotor so mittels eines Phasenanschnitts und/oder Phasenabschnitts anzusteuern, dass das vom Antriebsmotor erzeugte Drehmoment gemäß einer einstellbaren Anhaltefunktion reduziert wird. Der Prozessor stellt die Anhaltefunktion in Abhängigkeit von detektierten Prozessdaten des Transportabschnitts ein, wobei die detektierten Prozessdaten Informationen über eine aktuelle Betriebstemperatur enthalten.

Die Steuervorrichtung ist für den Transportgutförderer vorgesehen, der insbesondere als ein Palettenförderer ausgebildet sein kann. Der Transportgutförderer weist zumindest den einen Transportabschnitt auf, bevorzugt jedoch eine Mehrzahl hintereinander angeordneter Transportabschnitte, die zusammen eine Transportbahn des Transportgutförderers bilden, entlang der die Transportgüter transportiert werden.

Der Transportgutförderer kann dazu ausgebildet sein, einzelne Transportabschnitte individuell und unterschiedlich anzusteuern und diese im voranstehend beschriebenen Stop-and-Go-Betrieb zu betreiben. Durch den Stop-and-Go-Betrieb können Abstände zwischen den transportierten Transportgütern eingestellt und/oder ausgebildet werden.

Der Transportabschnitt wird mittels des zumindest einen Antriebsmotors angetrieben. Der Transportabschnitt kann auch von mehreren Antriebsmotoren angetrieben werden, die von der Steuervorrichtung z.B. gleichzeitig angesteuert werden. Der Antriebsmotor kann insbesondere der Antriebsmotor einer Antriebsrolle sein, welche als eine Förderrolle in dem Transportabschnitt angeordnet sein kann. Der Antriebsmotor kann zum Beispiel als ein Trommelmotor ausgebildet sein, der zum Beispiel einen Käfigläufer und/oder anderen asynchronen Motor aufweist. Der Transportabschnitt kann eine Mehrzahl von Rollen aufweisen, die mit der zumindest einen Antriebsrolle so verbunden sind, dass der Antriebsmotor im Wesentlichen sämtliche Rollen des Transportabschnitts antreibt und/oder anhält (d.h. abbremst). Alternativ kann der Transportabschnitt auch einen Fördergurt aufweisen, der vom Antriebsmotor angetrieben wird.

Die Steuervorrichtung weist einen Prozessor auf, welcher als ein Mikroprozessor ausgebildet sein kann und/oder als ein Prozessor eines Computers. Der Prozessor ist dazu ausgebildet und vorgesehen, die Steuersignale für den zumindest einen Antriebsmotor zu generieren und bereitzustellen. Dadurch ist der Prozessor dazu in der Lage, den Antriebsmotor zu steuern und/oder zu regeln, ihn insbesondere in dem Stop-and-Go-Betrieb anzusteuern.

Zum Generieren der Steuersignale kann der Prozessor zusätzlich zumindest ein Signal und/oder Daten und/oder zumindest eine Stromversorgung und/oder zumindest eine Spannungsversorgung verwenden. Zum Beispiel kann der Prozessor mittels eines Detektors Informationen darüber erhalten, zu welchen Zeitpunkten der Transportabschnitt (und somit der Antriebsmotor) angetrieben werden soll und zu welchen Zeitpunkten er angehalten werden soll. Ein solcher Detektor kann zum Beispiel eine Lichtschranke aufweisen, welche dem Prozessor Daten darüber übermittelt, zu welchem Zeitpunkt ein nachfolgender Transportabschnitt belegt ist oder frei ist.

Der Prozessor ist dazu konfiguriert, die entlang des Transportabschnitts transportierten Transportgüter mittels eines Phasenanschnitts und/oder Phasenabschnitts zu beschleunigen und/oder abzubremsen. Ein initiales Drehmoment von elektrischen Antriebsmotoren kann mittels eines zeitlich ansteigenden Phasenan- bzw. Phasenabschnitts reduziert werden. Hierbei können Phasenan- und/oder Phasenabschnittssteuerungen den Antriebsmotor des Transportgutförderers so ansteuern, dass der Antriebsmotor aus einem unangetriebenen Zustand zunächst mit einer reduzierten Leistung angetrieben wird, so dass der Antriebsmotor deutlich unter Vollast sanft anfahren kann. Dies reduziert die Gefahr eines Verkippens oder Ladungsverformung durch Verschiebung von Transportgütern, die auf dem Transportabschnitt gefördert werden.

Die Steuervorrichtung nutzt den Phasenanschnitt und/oder Phasenabschnitt nicht nur beim Anfahren des Transportabschnitts, sondern auch beim Anhalten des Transportabschnitts. Hierbei wird das Drehmoment des Antriebsmotors nicht unmittelbar von der vollen Nennleistung (also von dem Betriebsdrehmoment) auf z.B. Null abgebremst wird, sondern allmählich (z.B. stufenlos oder in einzelnen Schritten) über einen gewissen Anhaltezeitraum hinweg. Dadurch wird auch beim Anhalten des Transportabschnitts die Gefahr eines Umkippens oder Ladungsverformung durch Verschiebung der Transportgüter reduziert.

Durch den Phasenanschnitt und/oder Phasenabschnitt wird das vom Antriebsmotor erzeugte Drehmoment beim Starten des Transportabschnitts über einen Startzeitraum gesteigert, zum Beispiel von einem reduzierten Startdrehmoment zum Betriebsdrehmoment, welches auch ein Solllastdrehmoment genannt wird. Die Steigerung kann zum Beispiel linear und/oder im Wesentlichen stetig und/oder in einzelnen Stufen erfolgen. In diesem Fall kann auch von einer Startrampe gesprochen werden, entlang derer das Drehmoment des Antriebsmotors erhöht wird. Unter Vollast kann der Antriebsmotor betrieben werden, dass das der Transportabschnitt mit dem im Wesentlichen konstanten Betriebsdrehmoment des Antriebsmotors angetrieben wird.

Auch beim Anhalten des Antriebsmotors wird das vom Antriebsmotor erzeugte Drehmoment mittels eines Phasenanschnitts und/oder Phasenabschnitts reduziert vom vollen Betriebsdrehmoment auf z.B. Null oder ein von Null verschiedenes Anhaltedrehmoment. Das Reduzieren des Drehmoments kann während eines Anhaltezeitraums erfolgen, während dessen das erzeugte Drehmoment immer weiter reduziert wird, zum Beispiel stetig und/oder linear. In diesem Fall kann auch von einer Stopprampe gesprochen werden, entlang derer das Drehmoment des Antriebsmotors reduziert wird.

Das Anhalten des Antriebsmotors wird vom Prozessor so gesteuert, dass das vom Antriebsmotor erzeugte Drehmoment gemäß der Anhaltefunktion reduziert wird. Die Anhaltefunktion kann zum Beispiel eine Funktion des Drehmoments über die Zeit sein. Hierbei ist das Drehmoment initial das Betriebs- oder Solllastdrehmoment, welches über den Anhaltezeitraum immer weiter reduziert wird und am Ende des Anhaltezeitraums z.B. Null beträgt oder einem Anhaltedrehmoment entspricht. Die Anhaltefunktion kann insbesondere eine abnehmende Funktion sein, zum Beispiel eine monoton abnehmende Funktion, während der das Drehmoment zum Beispiel linear und/oder stufenweise reduziert wird.

Es hat sich herausgestellt, dass einige Prozesse und/oder Gegebenheiten des Transportabschnitts beeinflussen können, wie schnell das geförderte Transportgut angehalten werden kann. Diese Prozesse und/oder Gegebenheiten können somit die Anhaltestrecke des auf dem Transportabschnitt geförderten Transportguts beeinflussen. Zur Nachverfolgung der Transportgüter ist es entscheidend, wie schnell und über welcher Anhaltestrecke die einzelnen Transportgüter angehalten werden können, z.B. um noch nicht in den nachfolgenden Transportabschnitt hineingefördert zu werden. Abhängig vom genauen Prozess und/oder den Gegebenheiten können sich beim Anhalten der entlang der Transportabschnitte geförderten Transportgüter unterschiedliche Anhaltestrecken ergeben, welche um mehrere Zentimeter voneinander abweichen können, insbesondere auch im zweistelligen Zentimeterbereich.

Einige der Prozesse und/oder Gegebenheiten des Transportabschnitts können zumindest teilweise in den Prozessdaten ausgedrückt werden. Um die Position der einzelnen Transportgüter besser kontrollieren und/oder einstellen zu können, kann der Prozessor maßgebliche Prozessdaten des Transportabschnitts berücksichtigen. Hierbei können die Prozessdaten aktuell gemessene und/oder individuelle Prozessdaten sein. Hierbei sind aktuelle gemessene Prozessdaten solche, welche erst kurz vor der Verwendung und/oder Berücksichtigung durch den Prozessor detektiert worden sind, also z.B. innerhalb eines vorgegebenen Zeitraums von z.B. weniger als einer Minute, bevorzugt von weniger als einer Sekunde vor der Berücksichtigung durch den Prozessor. Individuelle Prozessdaten können spezifische Prozessdaten des angesteuerten Transportabschnitts betreffen, einschließlich spezifischer Informationen über das aktuell auf dem Transportabschnitt geförderte Transportgut, wie z.B. Gewicht, Gewichtsschwerpunkt etc.

Der Prozessor ist dazu ausgebildet, diese Prozessdaten zu berücksichtigen und die Anhaltefunktion entsprechend einzustellen. Entspricht die Anhaltefunktion im Wesentlichen einer etwa linear abfallenden Funktion (entsprechend einer Stopprampe), so kann zum Beispiel die negative Steigung und somit die Länge der Stopprampe eingestellt werden, also die Dauer der negativen Steigung bis zum vollständigen Anhalten. Der Prozessor kann zum Beispiel den Anhaltezeitraum einstellen, über welchen das Drehmoment vom Betriebsdrehmoment auf das Anhaltedrehmoment reduziert wird. Die Einstellung der Anhaltefunktion kann anhand von Parametern erfolgen, welche in einem Speichermittel der Steuervorrichtung hinterlegt sein können. Die Einstellung kann somit insbesondere auf Parametern beruhen, die vorab gespeichert sind in einem Speichermittel der Steuervorrichtung.

Hierdurch kann die Kontrolle über die Position der Transportgüter verbessert werden, da die Anhaltewege individuell eingestellt und/oder beeinflusst werden.

Der Prozessor kann dazu ausgebildet sein, bei jedem einzelnen Anhaltevorgang aktuelle und/oder individuelle Prozessdaten zu berücksichtigen.

Gemäß einer Ausführungsform ist die Anhaltefunktion eine zeitabhängige Funktion des Drehmoments des Antriebsmotors. Das Drehmoment des Antriebsmotors kann über den Phasenanschnitt und/oder den Phasenabschnitt angesteuert werden. Insbesondere kann die Größe des Drehmoments vom Prozessor mittels des Phasenanschnitts und/oder Phasenabschnitts eingestellt werden. In Abhängigkeit der detektierten Prozessdaten kann die Anhaltefunktion ausgewählt werden, welche zu den detektierten Prozessdaten passt. Insbesondere kann auch eine einzige Anhaltefunktion verwendet werden, welche jedoch in Abhängigkeit der detektierten Prozessdaten parametrisiert wird. Mit anderen Worten kann der Prozessor in Abhängigkeit der detektierten Prozessdaten zumindest einen Parameter der Anhaltefunktion auswählen, der die zeitabhängige Funktion des Drehmoments verändert und/oder beeinflusst. Hierbei kann insbesondere ein vorbestimmter Anhaltezeitraum eingestellt werden, also der Zeitraum, über den das Drehmoment vom Betriebsdrehmoment auf Null reduziert wird. Der Anhaltezeitraum kann auch als der Zeitraum definiert sein, über den das Drehmoment vom Betriebsdrehmoment auf das Anhaltedrehmoment reduziert wird. Dabei muss das Anhaltedrehmoment nicht notwendigerweise Null entsprechen, sondern kann z.B. kleiner oder gleich groß sein wie ein Startdrehmoment. Weiterhin kann auch der Betrag und/oder die Richtung des Anhaltedrehmoments einstellbar sein und/oder eingestellt werden, z.B. durch Parameter der Anhaltefunktion.

Gemäß einer Ausführungsform stellt der Prozessor einen Anhaltezeitraum, über welchen das Drehmoment des Antriebsmotors von einem Betriebsdrehmoment auf ein Anhaltedrehmoment reduziert wird, in Abhängigkeit von den detektierten Prozessdaten ein. Der Anhaltezeitraum kann ein Parameter der Anhaltefunktion sein, und an die detektierten Prozessdaten angepasst werden. Das Anhaltedrehmoment kann z.B. Null betragen, oder einem Startdrehmoment entsprechen. Allgemein kann das Anhaltedrehmoment ungleich Null sein, insbesondere kleiner als ein Startdrehmoment, mit welchem der Antriebsmotor gestartet wird.

Gemäß einer Ausführungsform stellt der Prozessor das Anhaltedrehmoment, auf das das Drehmoment des Antriebsmotors beim Anhalten reduziert wird, in Abhängigkeit von den detektierten Prozessdaten ein.

Erfindungsgemäß enthalten die detektierten Prozessdaten Informationen über eine aktuelle Betriebstemperatur. In einem Ausführungsbeispiel enthalten die detektierten Prozessdaten zusätzlich Informationen über ein Transportgutgewicht eines entlang des Transportgutförderers transportierten Transportguts. Die Betriebstemperatur kann insbesondere die Betriebstemperatur des Antriebsmotors sein, welche die Anhaltestrecke beim Anhalten des Transportabschnitts beeinflusst. Zusätzlich können die Prozessdaten Informationen über das Transportgutgewicht enthalten. Hierbei können sie insbesondere Informationen über das Transportgutgewicht des entlang des Transportabschnitts transportierten Transportguts enthalten, welches der zumindest einen Antriebsmotor antreibt. Auch das Transportgutgewicht kann den Anhalteweg beim Anhalten des Transportguts bzw. des Transportabschnitts beeinflussen. Das Transportgutgewicht und die Betriebstemperatur sind hierbei zwei unterschiedliche Prozessdaten, die den Anhalteweg spürbar beeinflussen. Hierbei ist insbesondere die Betriebstemperatur des Antriebsmotors ein entscheidender Prozessparameter, welcher den Anhalteweg sogar noch stärker beeinflusst als das Gewicht des Transportguts. Dies gilt jedoch lediglich in normalen Fällen. Da in den meisten Fällen Transportgüter eines relativ ähnlichen Transportgutgewichts transportiert werden, ist in bei normalen Fällen das Transportgutgewicht von eher untergeordneter Rolle. In diesen Fällen kann es ausreichend sein, als Prozessdaten lediglich die Betriebstemperatur des Antriebsmotors zu berücksichtigen. In anderen Einsatzfällen, bei denen entlang des Transportgutförderers Transportgüter mit stark unterschiedlichen Transportgutgewichten transportiert werden, kann eine zusätzliche Berücksichtigung des Transportgutgewichts als Prozessdaten sinnvoll sein oder schon alleine zu einer verbesserten Steuerung und/oder Positionskontrolle führen.

Gemäß einer Ausführungsform berücksichtigt der Prozessor beim Einstellen der Anhaltefunktion als Prozessdaten die Betriebstemperatur des Antriebsmotors. Hierbei kann insbesondere die aktuell gemessene Betriebstemperatur des Antriebsmotors berücksichtigt werden, also die Betriebstemperatur, die unmittelbar vor der Berücksichtigung durch den Prozessor gemessen worden ist, zum Beispiel höchstens vor einer Minute, bevorzugt höchstens vor einer Sekunde. Die Prozessdaten müssen dabei die Betriebstemperatur des Antriebsmotors nicht unmittelbar als Wert, zum Beispiel in Grad Kelvin oder Grad Celsius enthalten. Die Prozessdaten können auch lediglich Informationen über die Betriebstemperatur enthalten, also die Betriebstemperatur lediglich mittelbar enthalten. Eine solche mittelbare Information kann zum Beispiel der elektrische Widerstand eines Bauteils mit der Betriebstemperatur des Antriebsmotors sein, oder ähnliches. Weiterhin muss hierbei nicht zwingend die exakt gemessene Betriebstemperatur des Antriebsmotors verwendet werden. Vielmehr kann auch eine abgeschätzte Betriebstemperatur als Prozessdaten verwendet werden, welche z.B. um maximal etwa 10%, bevorzugt um maximal etwa 5% von der tatsächlichen Betriebstemperatur abweicht.

In einer Weiterbildung dieser Ausführungsform generiert der Prozessor Steuersignale für den Antriebsmotor einer Antriebsrolle des Transportabschnitts und die Betriebstemperatur des Antriebsmotors wird durch Ermittlung des temperaturabhängigen elektrischen Widerstands einer Haltebremse der Antriebsrolle bestimmt. Die Haltebremse kann ein Bauteil des Transportgutförderers sein, das ohnehin in der Antriebsrolle verbaut ist. Dadurch wird kein zusätzlicher Temperatursensor benötigt. Da es technisch umständlich sein kann, den temperaturabhängigen elektrischen Widerstand des Antriebsmotors direkt zu ermitteln, wird hierbei die Betriebstemperatur indirekt ermittelt. So liegt im Betrieb des Antriebsmotors zumindest eine Phase einer Wechselspannung am Antriebsmotor an, was eine Messung des temperaturabhängigen elektrischen Widerstands der Wicklungen des Antriebsmotors erschwert. Die Haltebremse kann jedoch im Wesentlichen dieselbe Betriebstemperatur wie der Antriebsmotor aufweisen, wenn sie als Haltebremse für dieselbe Antriebsrolle ausgebildet ist. Die Haltebremse kann so ausgebildet sein, dass sie im unbestromten Zustand die angetriebene Rolle abbremst. Liegt ein Strom und/oder eine Spannung an der Haltebremse an, so wird die Bremswirkung reduziert und/oder aufgehoben, so dass die Antriebsrolle vom Antriebsmotor angetrieben werden kann. An der Haltebremse kann eine geringere Spannung anliegen als am Antriebsmotor, zum Beispiel 24V an der Haltebremse und 400V am Antriebsmotor. Auch deswegen kann eine Messung des elektrischen Widerstands an der Haltebremse einfacher durchzuführen sein als eine Messung des elektrischen Widerstands der Wicklungen des Antriebsmotors. Die Betriebstemperatur der Haltebremse dient als Maß und/oder Abschätzung der Betriebstemperatur des Antriebsmotors.

An Stelle der Betriebstemperatur der Haltebremse kann die Temperatur eines anderen Bauteils der Antriebsrolle gemessen und verwendet werden. Bevorzugt ist dieses andere Bauteil der Antriebsrolle zumindest teilweise im Inneren des Rollenmantels angeordnet und/oder thermisch mit dem Antriebsmotor gekoppelt.

In einer Weiterentwicklung dieser Ausführungsform ist die Haltebremse benachbart zum Antriebsmotor auf einer stehenden Welle der Antriebsrolle angeordnet. Die stehende Welle kann sich in Temperaturaustausch sowohl mit der Haltebremse als auch mit dem Antriebsmotor befinden. Dadurch wird bei Temperaturmessung der Haltebremse indirekt auch die Betriebstemperatur des Antriebsmotors gemessen.

In einer zusätzlichen oder alternativen Weiterbildung dieser Ausführungsform wird die Haltebremse mit einer kleineren Betriebsspannung betrieben als der Antriebsmotor. Zum Beispiel kann die Haltebremse mittels einer 24V Betriebsspannung betrieben werden und der Antriebsmotor mit zumindest einer Phase einer 400V Betriebsspannung. Zudem kann der Antriebsmotor mittels einer Wechselspannung betrieben werden und die Haltebremse mittels einer Gleichspannung. Deswegen kann das Messen des temperaturabhängigen elektrischen Widerstands der Haltebremse technisch einfacher zu realisieren sein als die direkte Messung der Betriebstemperatur des Antriebsmotors.

Gemäß einer Ausführungsform berücksichtigt der Prozessor beim Einstellen der Anhaltefunktion als Prozessdaten ein Transportgutgewicht eines auf dem Transportgutförderer geförderten Transportguts. Das Transportgutgewicht kann von einem Gewichtssensor detektiert werden und an den Prozessor übergeben werden. Das Transportgutgewicht kann unmittelbar oder mittelbar in den Prozessdaten enthalten sein, zum Beispiel können lediglich Informationen über das Transportgutgewicht in den Prozessdaten enthalten sein, aus denen das Transportgutgewicht ermittelt werden kann. Da das Transportgutgewicht einen Einfluss auf die Anhaltestrecke des Transportguts haben kann, kann die Berücksichtigung des Transportgutgewichts einen deutlichen Einfluss auf die Auswahl und Einstellung der geeigneten Anhaltefunktion haben.

Gemäß einer Ausführungsform ist der Prozessor dazu konfiguriert, Informationen über ein Transportgutgewicht eines auf dem Transportgutförderer geförderten Transportguts aus der elektrischen Leistung zu ermitteln, welche beim Starten des Antriebsmotors benötigt wird, um das Transportgut auf eine Sollgeschwindigkeit zu beschleunigen. Beispielsweise kann der Prozessor beim Starten des Transportabschnitts registrieren und/oder messen, welche Beschleunigungsleistung erforderlich ist, um das Transportgut auf seine Sollgeschwindigkeit zu beschleunigen. Die Sollgeschwindigkeit kann das Transportgut dann erreichen, wenn der Antriebsmotor mit seinem Betriebsdrehmoment arbeitet. Die zur Beschleunigung benötigte elektrische Leistung kann Informationen über das Transportgutgewicht enthalten. Aus ihnen kann z.B. auch das Transportgutgewicht unmittelbar ermittelt werden. Hierbei kann auch lediglich ein Teil der dazu benötigten elektrischen (Beschleunigungs-)Leistung verwendet werden, beispielsweise der Leistungsanteil bis zum Beschleunigen auf die halbe Sollgeschwindigkeit, der Leistungsanteil für ein Beschleunigen von der halben Sollgeschwindigkeit auf die volle Sollgeschwindigkeit usw. Die Informationen über das Transportgutgewicht, die vom Prozessor ermittelt werden, können zum Beispiel in einem Speichermittel der Steuervorrichtung gespeichert werden und/oder ausgegeben werden an den Prozessor einer Steuervorrichtung eines nachfolgenden Transportabschnitts. Der Prozessor des nachfolgenden Transportabschnitts kann die Informationen dann als Prozessdaten verwenden, wenn der nachfolgende Transportabschnitt das Transportgut übernimmt und zum Anhalten bringen soll. Die Steuervorrichtung kann dazu ausgebildet sein, die Steuersignale für mehrere Antriebsmotoren unterschiedlicher Transportabschnitte zu generieren. In diesem Fall kann der Prozessor der Steuervorrichtung das gemessene Transportgutgewicht gegebenenfalls zu einem späteren Zeitpunkt selber verwenden, wenn er nämlich ein nachfolgenden Transportabschnitt zum Anhalten bringen soll, auf dem das zuvor beschleunigte Transportgut gerade gefördert wird.

Gemäß einer Ausführungsform weist die Steuervorrichtung zumindest einen Sensordateneingang auf, über welchen der Prozessor die detektierten Prozessdaten des Transportgutförderers zumindest teilweise erhält. Beispielsweise kann der Sensordateneingang mit dem Prozessor einer Steuervorrichtung eines vorangehenden Transportabschnitts verbunden sein. Zusätzlich und/oder alternativ kann der Sensordateneingang mit einem Prozessdatensensor verbunden sein, beispielsweise einem Temperatursensor und/oder einem Gewichtssensor zum Messen der Betriebstemperatur des Antriebsmotors bzw. des Gewichts des Transportguts.

Gemäß einer Ausführungsform weist die Steuervorrichtung zumindest einen Steuerausgang zum Ausgeben der Steuersignale an den zumindest einen Antriebsmotor des Transportgutförderers auf. Die Steuersignale können dabei unmittelbar die Antriebssignale mit dem Phasenanschnitt und/oder Phasenabschnitt enthalten, also die unmittelbaren Ansteuersignale mitsamt der nötigen Versorgungsleistung. Alternativ können die Steuervorrichtungen untereinander und/oder die Steuerungsvorrichtungen mit den Antriebsmotoren die Signale über eine Daten BUS-Leitung übertragen, beispielsweise einem CAN-Bus, was für Controller Area Network-Bus steht.

In einer Weiterbildung dieser Ausführungsform weist die Steuervorrichtung einen Versorgungseingang auf für eine Versorgungsspannung mit zumindest einer Phase, bevorzugt mit drei Phasen. Dabei stellt der Prozessor die zumindest eine Phase der Versorgungsspannung so als Steuersignal am Steuerausgang bereit, dass sie beim Starten und Anhalten des Antriebsmotors mit einem Phasenanschnitt und/oder einem Phasenabschnitt versehen ist. Mit anderen Worten generiert der Prozessor die unmittelbar vom Antriebsmotor verwendbaren Steuersignale mitsamt der Versorgungsspannung zum Betrieb, Anhalten und Starten des Antriebsmotors. Hierbei wird der Phasenanschnitt und/oder Phasenabschnitt zum Anhalten des Antriebsmotors mittels der eingestellten Anhaltefunktion verändert und/oder geformt. In einer Weiterbildung dieser Ausführungsform ist der Steuerausgang zweiteilig ausgebildet zum Ausgeben von zwei Steuersignalen zum Ansteuern zweier Antriebsmotoren des Transportgutförderers. Dabei generiert der Prozessor die beiden Steuersignale aus derselben Versorgungsspannung, welche am Versorgungseingang anliegt. Mit anderen Worten verwendet der Prozessor die Versorgungsspannung für zwei Antriebsmotoren, zum Beispiel für zumindest zwei Antriebsmotoren. Hierbei können die zwei Antriebsmotoren zum Beispiel die zwei Antriebsmotoren desselben Transportabschnitts sein. Bevorzugt sind die zwei Antriebsmotoren jedoch die Antriebsmotoren unterschiedlicher, zum Beispiel benachbarter Transportabschnitte. So kann jeder der Transportabschnitte einen eigenen Antriebsmotor aufweisen, welcher von demselben Prozessor der Steuervorrichtung angesteuert wird. Die Steuervorrichtung kann auch zum Generieren und Ausgeben der Steuersignale von mehr als zwei Antriebsmotoren ausgebildet sein, die mehr als zwei unterschiedliche Transportabschnitte antreiben.

Gemäß einer Ausführungsform weist die Steuervorrichtung einen Signaleingang auf, über welchen Eingangssignale an den Prozessor übermittelbar sind. Dabei enthalten die Eingangssignale Informationen über Startzeitpunkte und Anhaltezeitpunkte des zumindest einen Antriebsmotors. Der Prozessor ist dazu konfiguriert, an den übermittelten Startzeitpunkten und Anhaltezeitpunkten die Steuersignale für den zumindest einen Antriebsmotor so zu generieren, dass der Antriebsmotor mittels eines Phasenanschnitts und/oder Phasenabschnitts gestartet und angehalten wird. Mit anderen Worten erhält der Prozessor über den Signaleingang Eingangssignale, die dem Prozessor mitteilen, wann der zumindest eine Antriebsmotor gestartet werden soll und wann er angehalten werden soll. Diese Startzeitpunkte enthalten jedoch noch keinen Phasenschnitt und noch keine genauen Ansteuersignale zum Ansteuern des Antriebsmotors. Vielmehr setzt der Prozessor die Eingangssignale dahingehend um, dass er aus den Informationen über die Startzeitpunkte und Anhaltezeitpunkte genaue Steuersignale zum Ansteuern des Antriebsmotors generiert, insbesondere Steuersignale einschließlich der Versorgungsspannung für den Antriebsmotor. Mit anderen Worten kann der Prozessor das vom Antriebsmotor generierte Drehmoment steuern und/oder regeln.

Gemäß einer Ausführungsform generiert der Prozessor Steuersignale für den Antriebsmotor eines Palettenförderers als Transportgutförderer. Ein Palettenförderer fördert normierte Paletten, auf denen die Waren und/oder Transportgüter angeordnet sind. Paletten haben eine vordefinierte Größe und können deshalb besonders günstig und kontrolliert auf dem Palettenförderer gefördert werden.

Ein Aspekt betrifft einen Transportgutförderer mit zumindest einem Transportabschnitt, welcher von zumindest einem Antriebsmotor angetrieben wird, und einer Steuervorrichtung nach dem vorangehend beschriebenen Aspekt, wobei die Steuervorrichtung vom Prozessor der Steuervorrichtung generierte Steuersignale an den zumindest einen Antriebsmotor ausgibt. Der Transportgutförderer kann auch eine Mehrzahl von Transportabschnitten aufweisen, die einzeln ansteuerbar sind. Jeder Transportabschnitt weist dabei zumindest einen Antriebsmotor auf, der über eine Steuervorrichtung angesteuert wird. Hierbei kann entweder jeder Antriebsmotor durch eine eigene Steuervorrichtung angesteuert werden, oder die Steuervorrichtung kann mehrere, insbesondere alle Antriebsmotoren ansteuern. Hierbei steuert die Steuervorrichtung jeden Transportabschnitt derart, dass sie detektierte Prozessdaten des spezifischen Transportabschnittes zum Einstellen der jeweiligen Anhaltefunktion berücksichtigt und/oder verwendet. Die einzelnen Transportabschnitte können entlang einer Förderbahn hintereinander angeordnet sein. Die Transportgüter werden von einem Transportabschnitt auf den nächsten Transportabschnitt übergeben. Die einzelnen Transportabschnitte arbeiten im Stop-and-Go Betrieb, d.h. sie werden wiederholt angetrieben und angehalten.

Gemäß einem Ausführungsbeispiel weist der Transportgutförderer einen Temperatursensor zum Detektieren der Betriebstemperatur des zumindest einen Antriebsmotors auf, wobei der Temperatursensor Informationen über die detektierte Betriebstemperatur dem Prozessor der Steuervorrichtung als Prozessdaten bereitstellt. Als Temperatursensor kann insbesondere eine Haltebremse verwendet werden, die in Wärmeaustausch mit dem Antriebsmotor steht

Ein Aspekt betrifft ein Verfahren zum Steuern eines Transportgutförderers, wobei.
- zumindest ein Antriebsmotor eines Transportabschnitts des Transportgutförderers in einem Stop-and-Go-Betrieb betrieben wird;
- Prozessdaten des Transportabschnitts detektiert und bereitgestellt werden, wobei die detektierten Prozessdaten Informationen über eine aktuelle Betriebstemperatur enthalten;
- beim Anhalten des Transportabschnitts des Transportgutförderes der zumindest eine Antriebsmotor so mittels eines Phasenanschnitts und/oder Phasenabschnitts angesteuert wird, dass das vom Antriebsmotor erzeugte Drehmoment gemäß einer einstellbaren Anhaltefunktion reduziert wird; und
- die Anhaltefunktion in Abhängigkeit von den detektierten Prozessdaten eingestellt wird.

Das Verfahren kann insbesondere mittels einer Steuervorrichtung und/oder an einem Transportgutförderer gemäß der vorangehend beschriebenen Aspekte durchgeführt werden. Deswegen treffen alle voranstehend ausgeführten Merkmale und/oder Ausführungen auch auf das Verfahren gemäß diesem Aspekt zu und umgekehrt.

Im Rahmen dieser Erfindung können die Begriffe "im Wesentlichen" und/oder "etwa" so verwendet sein, dass sie eine Abweichung von bis zu 5% von einem auf den Begriff folgenden Zahlenwert beinhalten, eine Abweichung von bis zu 5° von einer auf den Begriff folgenden Richtung und/oder von einem auf den Begriff folgenden Winkel. Begriffe wie oben, unten, oberhalb, unterhalb, usw. beziehen sich - sofern nicht anders spezifiziert - auf das Bezugssystem der Erde in einer Betriebsposition des Gegenstands der Erfindung.

Die Erfindung wird nachfolgend anhand von in Figuren gezeigten Ausführungsbeispielen näher beschrieben. Hierbei können gleiche oder ähnliche Bezugszeichen gleiche oder ähnliche Merkmale der Ausführungsformen kennzeichnen. Einzelne in den Figuren gezeigte Merkmale können in anderen Ausführungsbeispielen implementiert sein. Es zeigen:
- Fig. 1: in einem Diagramm die Wirkungsweise einer Phasenabschnittssteuerung;
- Fig. 2A bis 2D: in jeweils einem Diagramm das angesteuerte Drehmoment eines Antriebsmotors gemäß unterschiedlichen Ausführungsbeispielen;
- Fig. 3A: in einer perspektivischen Ansicht drei Transportabschnitte eines Palettenförderers;
- Fig. 3B: in einer Ansicht entgegen der Transportrichtung die drei Transportabschnitte des Palettenförderers;
- Fig. 3C: in einer Seitenansicht die drei Transportabschnitte des Palettenförderers;
- Fig. 4: in einer Ansicht von oben drei Transportabschnitte eines Palettenförderers ohne Paletten;
- Fig. 5: in einer perspektivischen Ansicht eine Antriebsrolle eines Transportabschnitts eines Palettenförderers;
- Fig. 6: in einer Schnittansicht eine Antriebsrolle eines Transportabschnitts eines Palettenförderers; und
- Fig. 7: in einem schematischen Blockdiagramm eine Steuervorrichtung zum Ansteuern eines Antriebsmotors eines Transportabschnitts eines Transportgutförderers.

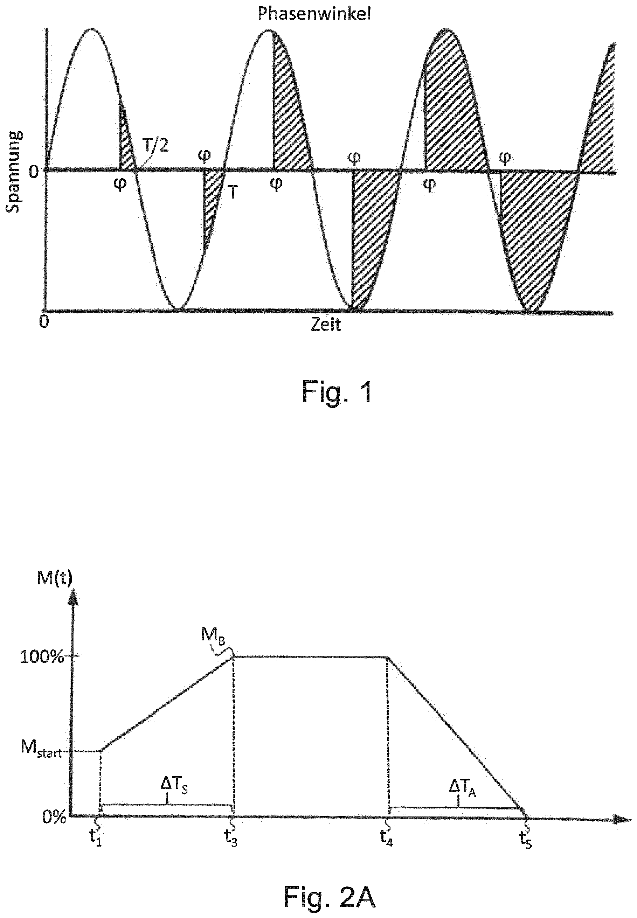

**Figur 1** zeigt in einem Diagramm die Wirkungsweise einer Phasenabschnittssteuerung. Das Diagramm zeigt den Spannungsverlauf einer Wechselspannung, die in etwa sinusförmig verläuft, aufgetragen über die Zeit. Bei der Spannung kann es sich zum Beispiel um eine typische Wechselspannung handeln, die vom z.B. einphasigen Stromnetz bereitgestellt wird. Um z.B. einen sanften Anlauf eines Transportgutförderers zu bewirken, schneidet eine Phasenabschnittssteuerung zum Beschleunigen eines Transportabschnitts des Transportgutförderers einen Anteil der Phase der gezeigten Spannung an bzw. ab. Die Phasenabschnittssteuerung legt somit nur zu Teilen der Phasen die Wechselspannung auch tatsächlich an einen Antriebsmotor des Transportgutförderers an.

Bei einer Periodendauer T könnte während eines ersten im Diagramm dargestellten Sinusbogens der Wechselspannung, der unmittelbar angrenzend zum Nullzeitpunkt im Diagramm dargestellt ist, vom Zeitpunkt 0 bis zum Zeitpunkt T/2 Spannung an den Antriebsmotor angelegt werden. Während dieses Zeitraums "schneidet" die Phasenabschnittssteuerung für einen Großteil der Zeit zwischen 0 und T/2 diese Spannung jedoch "ab", und legt die Spannung lediglich gegen Ende des gezeigten ersten Sinusbogens an den Antriebsmotor an.

Im gezeigten Diagramm sind die Zeiträume, in denen die Phasenabschnittssteuerung Spannung an den Antriebsmotor von z.B. einem Transportgutförderer anlegt, durch eine schraffierte Fläche zwischen der sinusförmigen Spannung und der Nullachse der Spannung markiert. Ist die besagte Fläche ungefüllt, also weiß dargestellt, "schneidet" die Phasenabschnittssteuerung die Spannung "ab", legt die Spannung also nicht an den Antriebsmotor an.

Während des ersten, positiven sinusförmigen Spannungsbogens (also im Zeitraum von 0 bis T/2) lässt die Phasenabschnittssteuerung lediglich zu den letzten etwa 15% der zugehörigen Zeitspanne von T/2 die Spannung "durch". Dieser Prozentsatz nimmt langsam von Sinusbogen zu Sinusbogen der Wechselspannung zu, bis die Phasenabschnittssteuerung bei dem ganz rechts dargestellten Sinusbogen, der in dem Diagramm der siebte Sinusbogen ist, die volle Phase und Spannung an den Antriebsmotor anlegt. Hierbei ist zu beachten, dass die Anzahl der Sinusbögen (oder eigentlich Halbsinusbögen) beispielhaft zu verstehen ist. In der Realität wird die Phasenabschnittssteuerung die volle Spannung regelmäßig erst zu einem wesentlich späteren Zeitpunkt durchlassen. Die Anzahl der zu durchlaufenden Sinusbögen bis zum Anlegen der vollen Leistung kann dabei einstellbar sein.

In anderen Worten legt die Phasenabschnittssteuerung die Spannung nur ab bestimmten Phasenwinkeln ϕ an den Antriebsmotor an. Die Phasenabschnittssteuerung legt die Spannung nur ab einem gewissen Startphasenwinkel ϕ bis zum nächsten Nulldurchgang der Wechselspannung an den Antriebsmotor an. Dieser Startphasenwinkel ϕ kann sich z.B. von Nulldurchgang zu Nulldurchgang der Wechselspannung ändern, so dass die Phasenabschnittssteuerung immer früher Spannung an den Antriebsmotor anlegt, bis die volle Spannung an den Antriebsmotor anlegt. Allgemein kann eine Phasensteuerung so ausgelegt sein, dass sie beim Beschleunigen pro Periode T der Wechselspannung im Mittel immer länger Spannung an den Antriebsmotor anlegt, bis sie die volle Spannung anlegt.

Die Wirkungsweise einer Phasenanschnittssteuerung ähnelt der einer Phasenabschnittssteuerung. Ein Unterschied zwischen diesen beiden Phasensteuerungen besteht darin, dass die eine den Anfang eines Sinusbogens abschneidet, während die andere das Ende des Sinusbogens abschneidet. Ansonsten haben die beiden Phasensteuerungen, also die Phasenanschnittssteuerung und die Phasenabschnittssteuerung, eine ähnliche Wirkung. Während die eine Phasensteuerung ab einem Startphasenwinkel ϕ bis zum Nulldurchgang Spannung an den Antriebsmotor anlegt, legt die andere von einem Nulldurchgang nur bis zu einem Endphasenwinkel Spannung an. Da das Prinzip einer Phasenan- und/oder Phasenabschnittssteuerung einem Fachmann grundsätzlich bekannt ist, wird an dieser Stelle nicht weiter auf die Wirkungsweise einer Phasenan- und/oder Phasenabschnittssteuerung eingegangen, sondern diesbezüglich auf die einschlägige Fachliteratur verwiesen.

Der gezeigte Phasenabschnitt kann zum allmählichen Beschleunigen eines Antriebsmotors verwendet werden. Analog dazu der Antriebsmotor mittels des Phasenabschnitts angehalten werden. Hierbei kann der Startphasenwinkel ϕ, ab welchen die Phase tatsächlich an den Motor angelegt wird zunächst 0 betragen. Mit anderen Worten wird im normalen Betrieb bei z.B. Betriebsdrehmoment die volle Phase angelegt. Der Startphasenwinkel ϕ nimmt allmählich zu bis zum Wert 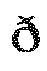 (also genau umgekehrt zu der in Fig. 1 gezeigten Verkleinerung). Dann liegt zu keinen Zeitpunkt mehr eine Spannung am Antriebsmotor und der Antriebsmotor steht still.

**Figuren 2A bis 2D** zeigen in jeweils einem Diagramm das angesteuerte Drehmoment M(t) gemäß einem ersten, zweiten, dritten und vierten Ausführungsbeispiel für einen Start/Stop-Zyklus eines im Stop-and-Go-Betrieb betriebenen Antriebsmotors. Hierbei ist an den x-Achsen die Zeit t aufgetragen, an den y-Achsen das angesteuerte Drehmoment von 0% bis 100% des maximalen Drehmoments. Hierbei muss das in den Figuren 2A bis 2D an den y-Achsen gezeigte, angesteuerte Drehmoment M(t) nicht exakt dem tatsächlich zum jeweiligen Zeitpunkt anliegenden Drehmoment entsprechen. Genauer ist an den y-Achsen der von einer Steuervorrichtung angesteuerte Phasenwinkel und/oder der Öffnungswinkel des entsprechenden Motorstellers in Prozent gezeigt, in einem Ausführungsbeispiel z.B. der Öffnungswinkel eines TRIACS (Abkürzung für "Triode for Alternating Current".). Wird der Transportgutförderer, wie gemäß einem Ausführungsbeispiel vorgesehen, mit zumindest einem Asynchronmotor betrieben, muss der angesteuerte Phasenwinkel nicht exakt dem tatsächlich anliegenden Drehmoment entsprechen. Deswegen sind die in den Figuren 2A bis 2D gezeigten Diagramme eher als schematische Prinzipskizzen zu verstehen, in denen an den jeweiligen y-Achsen eigentlich der jeweils angesteuerten Phasenwinkel gezeigt ist, welcher aber einem angesteuerten, gewünschten und/oder angestrebten Drehmoment entspricht. Der als Prozentwert gezeigte Wert kann auch als angesteuertes Drehmoment M(t) bezeichnet werden.

Allgemein kann der im Rahmen dieser Erfindung benutzte Begriff "Drehmoment" auch als "angesteuertes Drehmoment" und/oder als "angesteuerter Phasenwinkel" verstanden werden. Gleiches gilt entsprechend für die Begriffe "Betriebsdrehmoment", "Initialdrehmoment", und "Startdrehmoment", die auch als "angesteuerter Betriebsphasenwinkel", "angesteuerter Initialphasenwinkel" und "angesteuerter Startphasenwinkel" verstanden werden können.

Unterhalb der Zeitachsen sind mehrere Zeitpunkte markiert, an denen die Ansteuerung des Drehmoments des Antriebsmotors geändert wird. Aufeinander folgende Zeitpunkte sind mit t₁ bis t₅ gekennzeichnet.

In dem ersten Ausführungsbeispiel, das unter Bezug auf das in **Fig. 2A** gezeigte Diagramm beschrieben wird, wird zu dem ersten Zeitpunkt t₁ ein Startsignal zum Antreiben des Antriebsmotors generiert. Zum ersten Zeitpunkt t₁ wird der Antriebsmotor mit einem Startdrehmoment Mₛₜₐᵣₜ angetrieben, das z.B. etwa 30% des vollen Betriebsdrehmoments M_{B} betragen kann. Anschließend wird das Drehmoment für einen Steigungszeitraum ΔTs im Wesentlichen linear und stetig erhöht, bis es zum dritten Zeitpunkt t₃ das volle Betriebsdrehmoment M_{B} erreicht. Die Erhöhung wird unter Verwendung des Phasenan- und/oder Phasenabschnitts durchgeführt und dauert für den Steigungszeitraum ΔTs an, der hier t₃-t₁ beträgt.

Vom dritten Zeitpunkt t₃ bis zum vierten Zeitpunkt t₄ liegt das volle Betriebsdrehmoment M_{B} an und der Antriebsmotor wird normal betrieben, wobei er einen zugeordneten Transportabschnitt z.B. mit einer im Wesentlichen konstanten SOLL-Transportgeschwindigkeit antreibt. Am vierten Zeitpunkt t₄ wird ein Stoppsignal erzeugt und der Antriebsmotor zwischen dem vierten Zeitpunkt t₄ und dem fünften Zeitpunkt t₅ abgebremst auf 0% des Drehmoments als Anhaltedrehoment. Das Abbremsen erfolgt im Wesentlichen linear und stetig unter Verwendung des Phasenan- und/oder Phasenabschnitts. Das Abbremsen ist so ausgelegt, dass das Drehmoment gemäß einer einstellbaren Anhaltefunktion reduziert wird. Hierbei kann das Abbremsen über einen einstellbaren Anhaltezeitraum ΔT_{A} (hier: t₅-t₄). Der Anhaltezeitraum ΔT_{A} entspricht hierbei dem Zeitraum, über den das angelegte Drehmoment M(t) von Betriebsdrehmoment M_{B} auf Null reduziert wird. Allgemein entspricht der Anhaltezeitraum ΔT_{A} dem Zeitraum, über den das angelegte Drehmoment M(t) von Betriebsdrehmoment M_{B} auf das Anhaltedrehmoment reduziert wird.

Sowie das angelegte Drehmoment M(t) auf Null reduziert ist, also im gezeigten Beispiel zum fünften Zeitpunkt t₅, kann eine Totzeit ΔT_{T} gestartet werden, in der zur Vermeidung eines Aufschaukelns ein erneutes Anfahren verzögert wird.

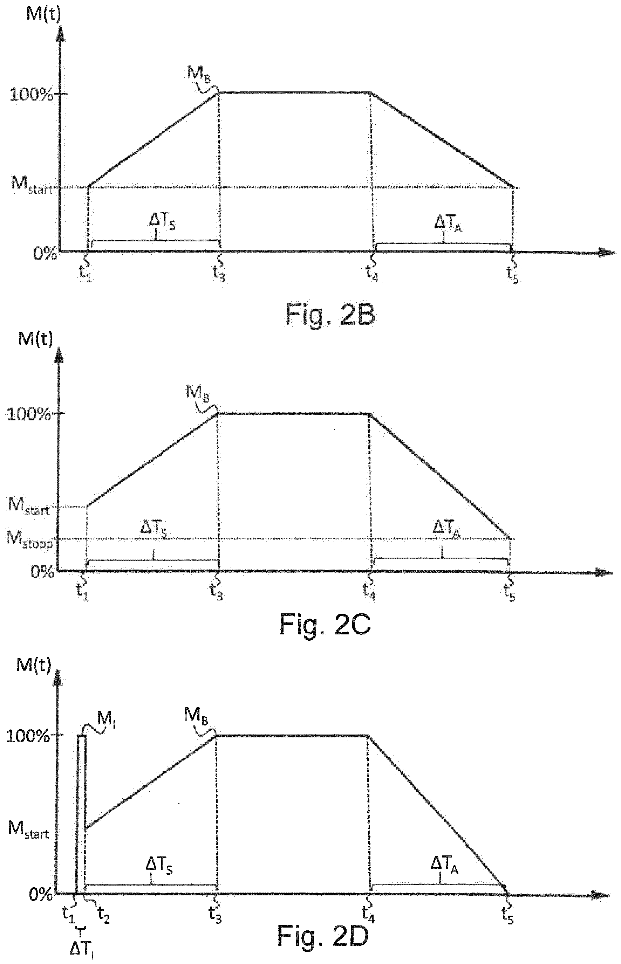

In dem zweiten Ausführungsbeispiel, das unter Bezug auf das in **Fig. 2B** gezeigte Diagramm beschrieben wird, wird der Antriebsmotor bis zum vierten Zeitpunkt t₄ genauso wie im ersten Ausführungsbeispiel angesteuert. An dem vierten Zeitpunkt t₄ wird ein Stoppsignal erzeugt und der Antriebsmotor zwischen dem vierten Zeitpunkt t₄ und dem fünften Zeitpunkt t₅ abgebremst auf das Startdrehmoment Mₛₜₐᵣₜ als Anhaltedrehoment. Das Abbremsen erfolgt auch hier im Wesentlichen linear und stetig unter Verwendung des Phasenan- und/oder Phasenabschnitts. Im Unterschied zum ersten Ausführungsbeispiel wird das Drehmoment aber nicht vollständig auf Null reduziert, sondern auf ein Anhaltedrehmoment, welches genauso groß ist wie das Startdrehmoment Mstart.

Auch hierbei ist das Abbremsen so ausgelegt, dass das Drehmoment gemäß einer einstellbaren Anhaltefunktion reduziert wird. Hierbei kann das Abbremsen über einen einstellbaren Anhaltezeitraum ΔT_{A} (hier: t₅-t₄). Auch das Anhaltedrehmoment kann einstellbar sein und entspricht beim zweiten Ausführungsbeispiel dem Betrag und der Richtung nach dem Startdrehmoment Mstart.

Dieses zweite Ausführungsbeispiel weist den Vorteil auf, dass der Antriebsmotor schneller und einfacher beschleunigt werden kann, da durch das von Null verschiedene Anhaltedrehmoment auch am angehaltenen Transportabschnitt eine Vorspannung am Antriebsmotor anliegt.

In dem dritten Ausführungsbeispiel, das unter Bezug auf das in **Fig. 2C** gezeigte Diagramm beschrieben wird, wird der Antriebsmotor bis zum vierten Zeitpunkt t₄ genauso wie im ersten und zweiten Ausführungsbeispiel angesteuert. An dem vierten Zeitpunkt t₄ wird ein Stoppsignal erzeugt und der Antriebsmotor zwischen dem vierten Zeitpunkt t₄ und dem fünften Zeitpunkt t₅ abgebremst auf das Stoppdrehmoment Mₛₜₒₚₚ als Anhaltedrehoment. Das Abbremsen erfolgt auch hier im Wesentlichen linear und stetig unter Verwendung des Phasenan- und/oder Phasenabschnitts. Im Unterschied zum ersten Ausführungsbeispiel wird das Drehmoment aber nicht vollständig auf Null reduziert, sondern genauso wie beim zweiten Ausfürhungsbeispiel auf ein von Null verschiedenes Anhaltedrehmoment. Das Anhaltedrehmoment entspricht dem vorbestimmten oder einstellbaren Stoppdrehmoment Mₛₜₒₚₚ, welches kleiner als das Startdrehoment Mₛₜₐᵣₜ ist. Insbesondere kann das Stoppdrehmoment Mₛₜₒₚₚ von etwa 20% des Startdrehmoment Mstart bis etwa 80% des Startdrehmoment Mstart betragen, insbesondere von etwa 35% des Startdrehmoment Mₛₜₐᵣₜ bis etwa 65% des Startdrehmoment Mstart.

Auch hierbei ist das Abbremsen so ausgelegt, dass das Drehmoment gemäß einer einstellbaren Anhaltefunktion reduziert wird. Hierbei kann das Abbremsen über einen einstellbaren Anhaltezeitraum ΔT_{A} (hier: t₅-t₄). Auch das Anhaltedrehmoment kann einstellbar sein.

Dieses dritte Ausführungsbeispiel weist ebenso wie das zweite Ausführungsbeispiel den Vorteil auf, dass der Antriebsmotor schneller und einfacher beschleunigt werden kann, da durch das von Null verschiedene Anhaltedrehmoment auch am angehaltenen Transportabschnitt eine Vorspannung am Antriebsmotor anliegt. Hierbei ist das Anhaltedrehmoment allerdings kleiner als das Startdrehmoment Mₛₜₐᵣₜ. Dadurch wird die Wahrscheinlichkeit reduziert, dass der Antriebsmotor den Transportabschnitt unbeabsichtigt antreibt, wenn auch nur mit einer geringen Geschwindigkeit.

Allgemein kann der Wert des Startdrehmoments Mₛₜₐᵣₜ so ausgewählt sein, dass bei Anlegen des Startdrehmoment Mₛₜₐᵣₜ der Transportabschnitt gerade so angetrieben wird, also z.B. die Haftreibung gerade so überwunden wird. Deswegen kann das Anlegen eines Anhaltedrehmoments, welches kleiner als das Startdrehmoment Mstart ist, eine Bewegung des angehaltenen Transportabschnitts verhindern.

In dem vierten Ausführungsbeispiel, das unter Bezug auf das in **Fig. 2D** gezeigte Diagramm beschrieben wird, wird der Antriebsmotor ähnlich zum ersten Ausführungsbeispiel angesteuert. Wie in allen Ausführungsbeispielen wird zum ersten Zeitpunkt t₁ wird das Startsignal zum Antreiben des Antriebsmotors generiert. Für eine vorgegebene Zeitdauer zwischen dem ersten Zeitpunkt t₁ und einem zweiten Zeitpunkt t₂ wird der Antriebsmotor mit einem Initialdrehmoment M_{I} betrieben. Das Initialdrehmoment M_{I} entspricht einem unreduzierten, vollen Drehmoment von 100% des Betriebsdrehmoment M_{B}. Das Initialdrehmoment M_{I} wird für einen Initialzeitraum ΔT_{I} (hier: t₂-t₁) angelegt, bis ein gewisser Anschub geleistet ist.

Zum zweiten Zeitpunkt t₂ wird das Drehmoment auf das Startdrehmoment Mstart reduziert, das z.B. etwa 30% des vollen Betriebsdrehmoments M_{B} betragen kann. Anschließend wird der Antriebsmotor analog zum ersten Ausführungsbeispiel angesteuert.

Dieses Initialdrehmoment Mi kann nicht nur zusätzlich vor dem ersten Ausführungsbeispiel angesteuert werden, sondern auch zusätzlich vor den anderen beiden Ausführungsbeispielen.

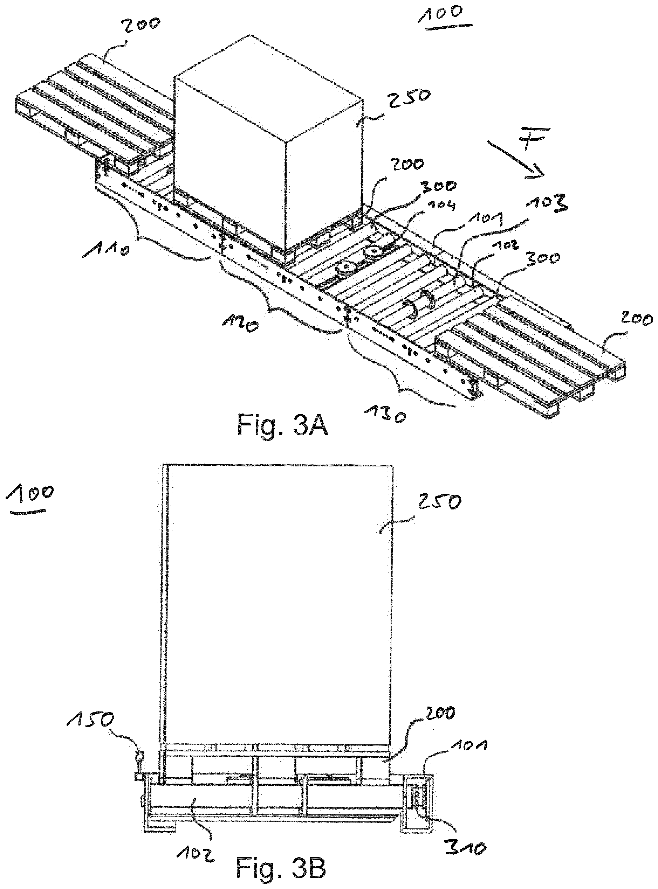

**Fig. 3A** zeigt in einer perspektivischen Darstellung einen Transportgutförderer 100, der als Palettenförderer ausgebildet ist. Der Transportgutförderer 100 dient zum Fördern von Paletten 200, von denen in Fig. 3A zwei ohne zusätzliche Last und eine dritte Palette 200 mit einem darauf abgestellten Transportgut 250 dargestellt sind.

Der Transportgutförderer 100 dient zum Fördern der Paletten 200 und/oder der darauf abgestellten Transportgüter 250 entlang einer Transportbahn in und/oder gegen eine Förderrichtung F. Dazu weist der Transportgutförderer 100 eine Mehrzahl von Transportabschnitten auf.

Im gezeigten Ausführungsbeispiel weist der Transportgutförderer 100 drei Transportabschnitte auf, nämlich einen ersten Transportabschnitt 110, einen zweiten Transportabschnitt 120 und einen dritten Transportabschnitt 130. Die drei Transportabschnitte 110, 120 und 130 sind in Förderrichtung F hintereinander und benachbart zueinander so angeordnet, dass die Paletten 200 und/oder die darauf angeordneten Transportgüter 250 zunächst entlang des ersten Transportabschnitts 110 gefördert werden, am Ende dieses ersten Transportabschnitts 110 auf den zweiten Transportabschnitt 120 übergeben werden, dort weitergeführt werden zum dritten Transportabschnitt 130, und dort weiter entlang der Förderrichtung F. Im gezeigten Ausführungsbeispiel sind die drei Transportabschnitte 110, 120, 130 geradlinig verlaufend ausgebildet. In anderen Ausführungsbeispielen kann der Transportgutförderer mehr oder weniger als drei Transportabschnitte aufweisen, insbesondere auch Transportabschnitte, die die Paletten 200 entlang einer Kurve fördern können. In einem Ausführungsbeispiel können immer auf den ersten Transportabschnitt 110 die Paletten auf die Fördervorrichtung F aufgegeben werden (Ladezone) und somit die Paletten immer aus dem Stillstand beschleunigt werden. In einem weiteren Ausführungsbeispiel, dass alternativ auch in Kombination mit dem vorherigen Ausführungsbeispiel (Ladezone) zum Einsatz kommen kann, werden immer von dem dritten Transportabschnitt 130 die Paletten von der Fördervorrichtung F entnommen (Entnahmezone) und somit die Paletten immer bis zum dem Stillstand abgebremst werden.

Der Transportgutförderer 100 fördert die Paletten 200 entlang einer Transportbahn, welche von einer Mehrzahl parallel zueinander angeordneter Rollen 102 gebildet wird, die in einem Rahmen 101 befestigt sind. Der Rahmen 101 stellt eine laterale und/oder seitliche Begrenzung der Transportbahn bereit. Der Rahmen 101 ist fortlaufend über die einzelnen Transportabschnitte 110, 120 und 130 und entlang der Förderrichtung F ausgebildet. Die Rotationsachsen der Rollen 102 sind im Wesentlichen senkrecht zu Förderrichtung F angeordnet, und zwar in einer im Wesentlichen horizontalen Ebene. Auch die Förderrichtung F ist entlang einer im Wesentlichen horizontalen Ebene angeordnet, kann allerdings auch eine geringe Neigung aufweisen. Die Rollen 102 sind im Wesentlichen gleichmäßig beabstandet zueinander im Rahmen 101 angeordnet. Die Rollenmäntel der Rollen 102 bilden eine Förderstrecke und/oder Transportbahn des Transportgutförderers 100.

Einzelne der Rollen können als Rollen 103 mit Ausrichtelementen ausgebildet sein, welche zur Führung der Palettenfüße dienen. Zwischen den Rollen können weiterhin Führungselemente 104 angeordnet sein, welche ebenfalls zum Ausrichten der Paletten 200 ausgebildet und vorgesehen sind.

Jeder der Transportabschnitte 110, 120 und 130 kann eine Antriebsrolle 300 aufweisen. Die Antriebsrolle 300 jedes Transportabschnitts kann im Wesentlichen in der Mitte des jeweiligen Transportabschnitts angeordnet sein.

**Fig. 3B** zeigt in einer Ansicht entgegen der Förderrichtung F den in Fig. 3A gezeigten Transportgutförderer 100. Hierbei ist gezeigt, dass an einer Seite des Rahmens 101 ein Übertragungsbereich 310 der Antriebsrolle 300 angeordnet ist. An dieser Seite weist der Rahmen 101 einen Hohlraum auf, in den der Übertragungsbereich 310 der Antriebsrolle 300 hineinragt. In diesem Übertragungsbereich 310 können Zahnräder angeordnet sein, die das Antriebsdrehmoment der Antriebsrolle 300 auf die übrigen Rollen 102 und/oder 103 des jeweiligen Transportabschnitts 110, 120 bzw. 130 übertragen. Im Übertragungsbereich 310 können Kopplungsmittel wie zum Beispiel Ketten angeordnet sein, die das Drehmoment der Antriebsrolle 300 auf die übrigen Rollen 102 und 103 des Transportabschnitts übertragen. Somit sind beim Antreiben der Antriebsrolle 300 sämtliche Rollen eines Transportabschnitts 110, 120 und/oder 130 angetrieben.

Seitlich am Rahmen 101 ist ein Detektor 150 angeordnet, der zum Beispiel als eine Lichtschranke ausgebildet sein kann. Der Detektor 150 kann erkennen, ob an der jeweiligen Detektorposition eine Palette 200 und/oder ein Transportgut 250 angeordnet ist. Dies kann zur Detektion und/oder Überprüfung dienen, ob der jeweilige Transportabschnitt 110, 120 und/oder 130 belegt ist oder nicht. Das Detektionsergebnis des Detektors 150 kann zum Ermitteln von Startzeitpunkten und Stoppzeitpunkten für einen der Transportabschnitte dienen, z.B. für den jeweils in Förderrichtung F vorangegangenen Transportabschnitt.

Der Transportgutförderer 100 kann im Stop-and-Go-Betrieb betrieben werden. Dies bedeutet, dass ein Transportabschnitt 110, 120 und/oder 130 gestoppt wird, die jeweils zugehörige Antriebsrolle 300 also nicht mehr angetrieben wird, solange der in Förderrichtung F nachfolgende Transportabschnitt noch belegt ist durch eine Palette 200 und/oder ein Transportgut 250. Der Detektor 150 kann unmittelbar oder mittelbar (als z.B. mittels Auswertung der Detektionsdaten in einem Prozessor) Detektionssignale erzeugen und bereitstellen, die Anhaltezeitpunkte und/oder Startzeitpunkte für die Paletten 200 und/oder Transportgüter 250 beinhalten, und zwar in Abhängigkeit von der detektierten Belegung der Transportbahn an der Position des Detektors 150.

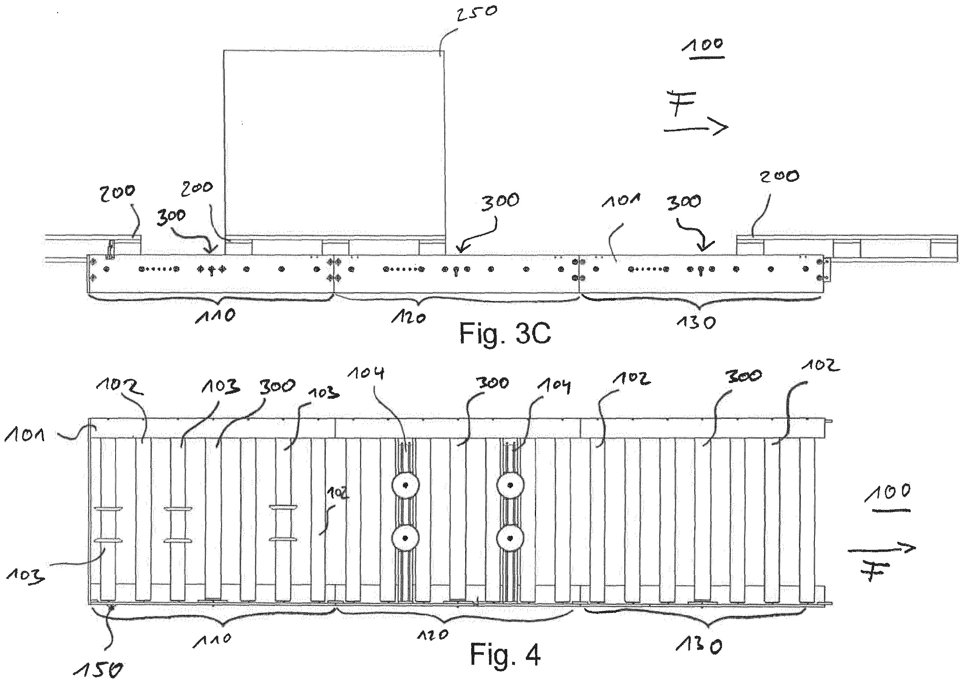

**Fig. 3C** zeigt den Transportgutförderer 100 in derselben Beladungssituation, in der er auch in Fig. 3A und Fig. 3B gezeigt ist. Hierbei ist gezeigt, dass alle drei Transportabschnitte 110, 120 und 130 im Wesentlichen gleich lang (in Förderrichtung F) ausgebildet sind und sie jeweils genau eine Antriebsrolle 300 aufweisen, die im Wesentlichen mittig in Förderrichtung F im jeweiligen Transportabschnitt angeordnet ist.

**Fig. 4** zeigt in einer Ansicht von oben den Transportgutförderer 100 ohne Paletten und ohne Transportgüter 250. Hierbei ist gezeigt, dass nicht alle der Transportabschnitte 110, 120 und 130 identisch ausgebildet sein müssen. Vielmehr können die einzelnen Transportabschnitte individuell und unterschiedlich ausgebildet sein.

So weist im gezeigten Ausführungsbeispiel der erste Transportabschnitt 110 drei Rollen mit Ausrichtelementen 103 auf, und zwar stromauf und stromab neben der Antriebsrolle 300. Der zweite Transportabschnitt 120 weist zwei Führungselemente 104 auf, die zwischen den Rollen 102 des zweiten Transportabschnittes 102 angeordnet sind, und zwar im Wesentlichen symmetrisch zur Antriebsrolle 300. Der dritte Transportabschnitt 130 weist neben der Antriebsrolle 300 ausschließlich normale Rollen 102 ohne Führungselemente und/oder Ausrichtelemente auf. Im gezeigten Ausführungsbeispiel weisen sämtliche Transportabschnitte die gleiche Anzahl von Rollen auf, nämlich links und rechts (eigentlich stromabwärts und stromaufwärts in Förderrichtung F betrachtet) jeweils drei Rollen 103 bzw. 102 neben der zentralen Antriebsrolle 300. In alternativen Ausführungsformen können die Transportabschnitte eine unterschiedliche Rollenanzahl aufweisen und andere Kombinationen von Rollen 102, 103 sowie Führungselemente 104 aufweisen.

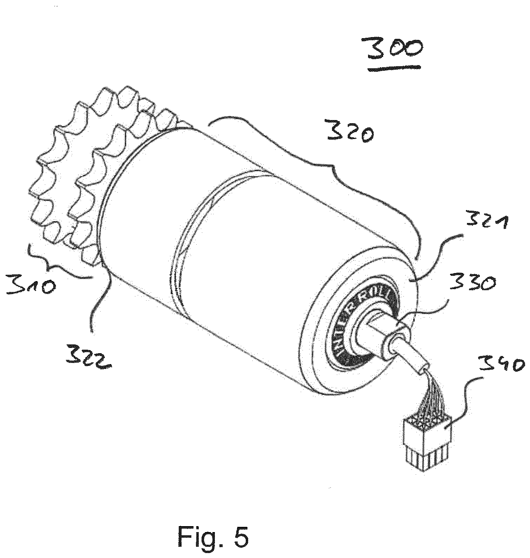

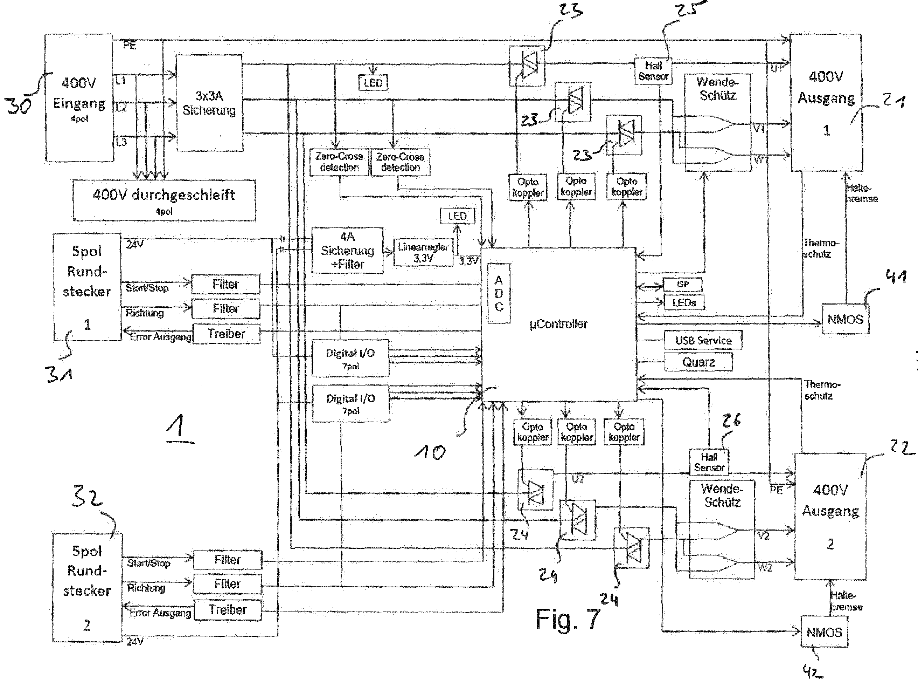

**Fig. 5** zeigt in einer perspektivischen Ansicht die Antriebsrolle 300, welche verkürzt dargestellt ist. Dies ist in der gezeigten Darstellung durch einen Auslassungsschlitz gekennzeichnet, der eine Verkürzung der Antriebsrolle 300 kennzeichnet. Die Antriebsrolle 300 weist einen Rollenmantel 320 auf, der die Antriebsrolle 300 als Zylindermantel radial begrenzt. An einem ersten Rollenmantelende 321 ragt eine stehende Welle 330 zu einem kurzen Stück, also als Achsstummel, aus der Antriebsrolle 300 hinaus. Dieser Achsstummel der stehenden Welle 330 kann fest im Rahmen 101 des Transportgutförderers 100 befestigt sein und/oder werden. Aus der stehenden Welle 330 ragen an diesem Ende elektrische Anschlüsse 340 heraus, über die die Antriebsrolle 300 mit einer Steuervorrichtung verbunden werden kann. Die Steuervorrichtung ist nachfolgend mit Bezug auf Fig. 7 näher beschrieben. Am gegenüberliegenden Rollenmantelende, dem zweiten Rollenmantelende 322, ist der Übertragungsbereich 310 der Antriebsrolle 300 angeordnet. Das erste Rollenmantelende 321 und das zweite Rollenmantelende 322 sind über die gesamte Förderbreite senkrecht zur Förderrichtung F (in einer im Wesentlichen horizontalen Richtung) voneinander beabstandet angeordnet.

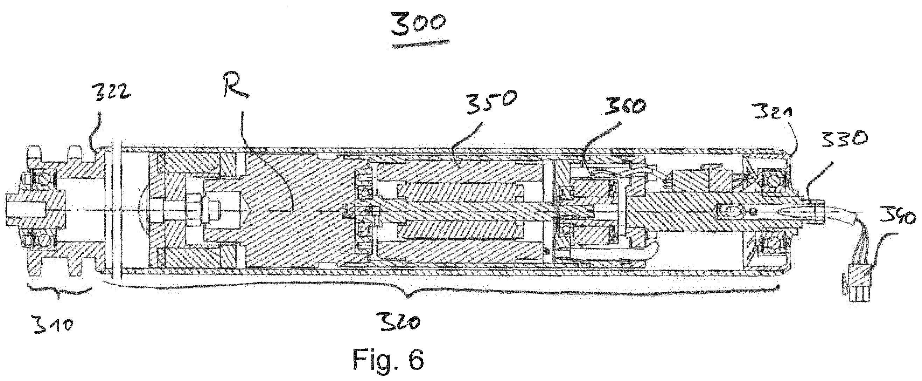

**Fig. 6** zeigt einen Querschnitt durch die Antriebsrolle 300. Auch der in Fig. 6 gezeigte Querschnitt ist verkürzt dargestellt, was durch die Unterbrechung an der linken Seite des Rollenmantels 320 gekennzeichnet ist. Am ersten Rollenmantelende 321 ist der Rollenmantel 320 über ein Lager, zum Beispiel ein Kugellager, drehbar um die stehende Welle 330 gelagert. Die Drehung des Rollenmantels kann über einen Antriebsmotor 350 bewirkt werden, der z.B. als ein Trommelmotor, Asynchronmotor und/oder als ein Käfigläufer ausgebildet sein kann.

Der Antriebsmotor 350 kann an der stehenden Welle 330 oder an einer Verlängerung der stehenden Welle 330 befestigt sein. Der Antriebsmotor 350 kann eine Drehung des Rollenmantels 320 um die Rotationsachse R und um die stehende Welle 330 herum bewirken. Hierbei treibt der Antriebsmotor 350 nicht nur den Rollenmantel 320, sondern auch die Übertragungsbereich 310 an, der ebenfalls über ein Lager drehbar gelagert an einem gegenüberliegenden Ende der stehenden Welle 330 gelagert ist. Hierbei kann die stehende Welle 330 durchgehend oder abschnittsweise durch den gesamten Rollenmantel 320 ausgebildet sein.

Am Übertragungsbereich 310 können Zahnräder ausgebildet sein, insbesondere zwei Zahnräder. Dabei kann eines der Zahnräder mit den übrigen Rollen 102 des jeweiligen Transportabschnitts 110, 120 bzw. 130 verbunden werden, die stromaufwärts von der Antriebsrolle 300 angeordnet sind und das andere mit denjenigen, die stromabwärts der Antriebsrolle 300 angeordnet sind. Über die Zahnräder kann auch jeweils nur die unmittelbar benachbarte Rolle 102 bzw. 103 mit der Antriebsrolle 300 verbunden werden. Diese können dann wiederum mit den jeweils dazu benachbarten Rollen 102 bzw. 103 verbunden sein usw. Mit anderen Worten kann das Drehmoment der Antriebsrolle 300 dazu verwendet werden, sämtliche Rollen 300, 102 und 103 des zugehörigen Transportabschnitts 110, 120 bzw. 130 anzutreiben und/oder anzuhalten.

Benachbart zum Antriebsmotor 350 ist auf der stehenden Welle 330 eine Haltebremse 360 angeordnet. Die Haltebremse bremst eine Rotation des Rollenmantels 320 um die Rotationsachse R, sofern die Haltebremse 360 nicht bestromt ist. Im unbestromten Zustand entfaltet und/oder bewirkt die Haltebremse 360 somit eine Bremswirkung. Soll die Antriebsrolle 300 angetrieben werden, so kann ein Lösestrom durch die Haltebremse 360 gesendet werden, der die Bremswirkung der Haltebremse 360 reduziert und/oder aufhebt. Hierbei kann zum Beispiel eine magnetische Reibkopplung gelöst werden oder ähnliches.

Die Bestromung, Steuerung und/oder Regelung der Haltebremse 360 und des Antriebsmotor 350 kann in die Antriebsrolle 300 über die elektrischen Anschlüsse 340 ein und/oder ausgeleitet werden.

Die Haltebremse 360 ist so benachbart zum Antriebsmotor 350 angeordnet, dass die Haltebremse 360 im Wesentlichen dieselbe Betriebstemperatur aufweist wie der Antriebsmotor 350. Durch Messung des elektrischen Widerstandes der Haltebremse 360 kann ein Rückschluss auf die Betriebstemperatur des Antriebsmotors 350 erfolgen. Mit anderen Worten kann die Haltebremse 360 als Temperatursensor für die Betriebstemperatur des Antriebsmotors 350 dienen und/oder verwendet werden.

**Fig. 7** zeigt in einem schematischen Blockdiagramm eine Steuervorrichtung 1 zum Ansteuern zweier Antriebsmotoren 350 zweier Antriebsrollen 300 des Transportgutförderers 100.

Die Steuervorrichtung 1 kann ein Gehäuse aufweisen in dem als ein zentrales Element ein Mikrocontroller 10 als Prozessor angeordnet ist. Der Prozessor 10 steuert und/oder regelt eine Mehrzahl von Signalen und/oder Versorgungsspannungen. In der gezeigten Ausführungsform weist die Steuervorrichtung 1 drei Eingänge auf, nämlich einen Versorgungseingang 30, einen ersten Signaleingang 31 und einen zweiten Signaleingang 32. Am Versorgungseingang 30 können drei Phasen einer 400V Versorgungsspannung bereitgestellt werden, die über Sicherungen als Versorgungsspannung bereitgestellt wurden. Der Prozessor 10 kann über Optocontroller mehrere TRIACS 23 und 24 ansteuern, welche ein Anlegen der drei Phasen an zwei Ausgänge 21 und 22 der Steuervorrichtung steuern und/oder regeln. TRIAC steht hierbei für "Triode for Alternating Current". Hierbei werden die drei Phasen der Versorgungsspannung, welche über den Versorgungseingang 30 bereitgestellt werden, sowohl an einem ersten Steuerausgang 21 als auch über einen zweiten Steuerausgang 22 als Steuersignale bereitgestellt.

Am ersten Signaleingang 31 kann einerseits eine 24V Versorgungsspannung anliegen, andererseits auch Start- und Stoppsignale für die Antriebsrolle 300 eines Transportabschnitts 110, 120 und/oder 130 des Transportgutförderers 100. Weiterhin können über den ersten Signaleingang auch Informationen über die Richtung oder Fehlermeldungen ein- und ausgegeben werden. Auch im zweiten Signaleingang 32 können Start- und Stoppzeitpunkte an den Mikrocontroller und/oder die Richtungsfehlersignale ein- und/oder ausgegeben werden. Auch hier kann eine nicht dargestellte Versorgungsspannung bereitgestellt werden. Im gezeigten Ausführungsbeispiel wird über den ersten Signaleingang 31 eine 24V Versorgungsgleichspannung bereitgestellt. Diese vergleichsweise niedrige Spannung kann zum Steuern und/oder Regeln diverser Funktionen verwendet werden, insbesondere zum Betrieb des Prozessors 10 sowie zur Ansteuerung der Haltebremsen 360 der beiden Antriebsrollen 300.

In Abhängigkeit von den erhaltenen Start- und Stoppsignalen, insbesondere von den Startzeitpunkten und/oder Stoppzeitpunkten, verarbeitet der Prozessor 10 die Phasen der Versorgungsspannung, welche am Versorgungseingang 30 bereitgestellt wird, zu Steuersignalen für die Haltebremse 360 und den Antriebsmotor 350 zweier Antriebsrolle 300. Hierbei steuert der Prozessor 10 über die Optocontroller die TRIACs 23 für den ersten Steuerausgang 21 so an, dass die in Figur 2 gezeigte Start und Stopprampe des Drehmoments angesteuert wird. Hierbei können die TRIACs 23 so angesteuert werden, dass das Drehmoment M(t) des Antriebsmotors 350 sowohl das zum Überwinden der Haftreibung verwendete Initialdrehmoment M_{I} als auch das Solldrehmoment und/oder Betriebsdrehmoment M_{B} erreicht. Zudem ist der Prozessor 10 dazu konfiguriert, das effektive Drehmoment M(t) im Steigungszeitraum ΔTs als auch im Anhaltezeitraum ΔT_{A} zu steuern und/oder zu regeln.

Gleiches gilt für die TRIACs 24 für den zweiten Steuerausgang 22.

Bei einem NMOS (Abkürzung für n-type metal-oxide semiconductor) 41 bzw. 42 kann der Prozessor 10 weiterhin die jeweilige Haltebremse 360 der jeweiligen Antriebsrolle 300 so steuern und/oder regeln, dass diese eine Bremswirkung entfaltet oder eben nicht. Über den NMOS 41 und/oder 42 kann der Prozessor 10 weiterhin detektieren, welchen elektrischen Widerstand die Haltebremse 360 aktuell aufweist, und dadurch Rückschlüsse auf die Betriebstemperatur des Antriebsmotors 350 schließen. Die Betriebstemperatur des Antriebsmotors 350 kann einen detektierten Prozessparameter bzw. ein Teil von Prozessdaten darstellen, die der Prozessor 10 verarbeitet. Als weitere detektierte Prozessdaten kann der Prozessor 10 das Gewicht des aktuell entlang des jeweiligen Transportabschnitts 110, 120 und/oder 130 transportierten Transportguts 250 verarbeiten. Das Transportgutgewicht kann insbesondere beim Anfahren ermittelt werden, und zwar in Abhängigkeit von der benötigten Leistung zum Beschleunigen des Transportguts 250 auf seine Sollgeschwindigkeit (bis zum Erreichen des Betriebsdrehmoments M_{B}). Hierbei kann insbesondere die benötigte Leistung während des Steigungszeitraums ΔTs verwendet werden. Die Leistung kann zum Beispiel über Hallsensoren 25 bzw. 26 detektiert werden. Die Prozessdaten bezüglich des Transportgutgewichts kann die Steuervorrichtung 1 an eine zum Beispiel baugleiche Steuervorrichtung eines nächsten und/oder nachfolgenden Transportabschnitts weiterleiten, so dass jede Steuervorrichtung 1 immer mit dem Transportgutgewicht des aktuell auf ihr transportierten Transportgut 250 versorgt ist.

Der Prozessor 10 ist dazu ausgelegt, die Anhaltefunktion bzw. Abschaltrampe beim Anhalten des Transportguts in Abhängigkeit der detektierten Prozessdaten einzustellen. Dazu ist die Anhaltefunktion einstellbar. Insbesondere kann die Anhaltefunktion parametrisierbar sein. Die Nachlaufstrecke der Palette 200 bzw. des Transportguts 250 kann von vielen Faktoren und/oder Prozessdaten abhängen. Die Nachlaufstrecke hängt insbesondere von der Betriebstemperatur des Antriebsmotors 350 ab. So ist die Nachlaufstrecke bei einer niedrigen Temperatur kürzer als bei einer höheren Betriebstemperatur. Weiterhin kann die Nachlaufstrecke vom Transportgutgewicht des Transportguts 50 abhängen, da schwere Transportgüter eine längere Nachlaufstrecke im Vergleich zu leichteren Transportgütern aufweisen.

Grundsätzlich kann der Prozessor 10 so ausgebildet sein, dass er eine standardisierte oder voreingestellte Nachlaufstrecke und/oder Anhaltestrecke bewirkt, entsprechend zu einem voreingestellten Anhaltezeitraum ÄT_{A}. Der Unterschied der Nachlaufstrecke zwischen leichten, also zum Beispiel ca. 20 kg schweren Paletten zu schweren Paletten 200, also zum Beispiel 1250 kg schweren Paletten, kann in einer Ausführungsform zum Beispiel ca. 40 mm betragen. Der Unterschied der Nachlaufstrecke bei einer Betriebstemperatur von 10°C, also bei einem kalten Antriebsmotor, und bei einer Betriebstemperatur bei etwa 80°C, also bei einem warmen Antriebsmotor, ist noch größer und kann in einer Ausführungsform zum Beispiel ca. 110 mm betragen.

Um die Nachlaufstrecke beim Anhalten der Paletten 200 und/oder der Transportgüter 250 in einem vergleichsweise engen Bereich zu halten und/oder dort zu begrenzen, werden detektierte, aktuelle Prozessdaten vom Prozessor 10 berücksichtigt, der die Anhaltefunktion einstellt und/oder auswählt. Hierbei kann der Prozessor 10 zum Beispiel Parameter und/oder Faktoren verwenden, welche in der nachfolgend gezeigten Tabelle beispielhaft gezeigt sind. Hierbei ist zu beachten, dass in Tabelle 1 lediglich Beispiele der Parameter und Faktoren gezeigt sind. Die genauen oder eigentlichen Parameter und/oder Faktoren können vor Betrieb ermittelt werden und dann in einem Speichermittel der Steuervorrichtung 1 gespeichert werden.

**Tabelle 1:**

| Betriebstemperatur [°C] | Temperaturabweichung [ÄK] | Faktor [0,1ms/Kelvin] | Orginal Parameterwert Anhaltezeitraum [ms] | Korrigerter Parameterwert Anhaltezeitraum [ms] |
|---|---|---|---|---|
| 20 | -5 | -100 | 1000 | 1050 |

| | | | | |
|---|---|---|---|---|
| 25 | 0 | -100 | 1000 | 1000 |
| 50 | 25 | -100 | 1000 | 750 |
| 65 | 40 | -100 | 1000 | 600 |
| 75 | 50 | -100 | 1000 | 500 |
| 80 | 55 | -100 | 1000 | 450 |

In der Tabelle 1 sind Faktoren und Parameter für eine (in der ersten Spalte gezeigte) Betriebstemperatur des Antriebsmotors von 20°C bis 80°C angegeben. In einer zweiten Spalte ist eine Temperaturabweichung in Kelvin von der Zimmertemperatur von 25°C angegeben. Die Temperaturabweichung ermittelt sich aus dem Unterschied der eingeschätzten Betriebstemperatur des Antriebsmotors 350 und der Zimmertemperatur von 25°C.

In der dritten Spalte der Tabelle 1 ist ein Faktor in 0,1 ms/K angegeben. Dieser Faktor ist bei sämtlichen Werten als -100 angegeben. Diese Faktoren sind lediglich beispielhaft zu verstehen. Bei einem tatsächlichen Transportabschnitt eines Transportgutförderers können diese Faktoren von -100 abweichen. Außerdem können für jede und/oder einige der Betriebstemperaturen (also für die einzelnen Zeilen) unterschiedliche Faktoren gelten und/oder verwendet werden. Die Faktoren können im Betrieb gemessen werden, und zwar anhand von einigen beispielhaft entlang des jeweiligen Transportabschnitts transportierten Paletten und/oder Transportgütern, die auf dem jeweiligen Transportabschnitt zum Anhalten gebracht werden.

In der vierten Spalte der Tabelle 1 ist ein Originalparameterwert für die Anhaltezeit in ms gegeben. Die Anhaltezeit ist in Figur 2 schematisch als ΔT_{A} angegeben und bestimmt den Anhaltezeitraum (hier 1000 ms) über welchen das Drehmoment M(t) des Antriebsmotores 350 vom Betriebsdrehmoment M_{B} auf das Anhaltedrehmoment reduziert wird. Die Reduktion erfolgt mittels der Anhaltefunktion, welche im gezeigten Ausführungsbeispiel eine lineare, monoton abnehmende und stetige Funktion ist. Die Anhaltefunktion kann auch als Stopprampe und/oder Rampdown Funktion bezeichnet werden. Der Originalparameterwert gibt die Anhaltezeit in ms bei einer Betriebstemperatur gleich der Zimmertemperatur des Antriebsmotors 350.

Durch Multiplikation der Temperaturabweichung (Spalte 2) mit dem jeweiligen Faktor (Spalte 3) der jeweiligen Betriebstemperatur (Spalte 1) wird vom Prozessor 10 ein korrigierter Parameterwert für die Anhaltezeit ΔT_{A} in ms ermittelt, welcher in der fünften Tabellenspalte angegeben ist. So wird der Anhaltezeitraum bei niedrigeren Temperaturen erhöht, bei höheren Temperaturen verkürzt, zum Beispiel auf 450 ms.

Durch die Einstellung der Anhaltefunktion, hier insbesondere des Anhaltezeitraums ΔT_{A} beim Anhalten des jeweiligen Transportabschnitts 110, 120 bzw. 130, wird die Nachlaufzeit der Palette 200 bzw. des Transportguts 250 begrenzt. Dadurch kann eine Positionierung der einzelnen, entlang des Transportgutförders 100 geförderten Transportgüter 250 verbessert werden, insbesondere genauer werden.

Der Prozessor 10 kann so konfiguriert und/oder programmiert sein, dass negative korrigierte Parameterwerte für den Anhaltezeitraum ΔT_{A} auf Null gesetzt, also erhöht werden.

Es wurde festgestellt, dass die Betriebstemperatur des Antriebsmotors 350 eine entscheidende Rolle bei der Nachlaufstrecke des geförderten Transportguts 250 einnimmt. Der Prozessor kann anstelle der exakt gemessenen und/oder detektierten Betriebstemperatur des Antriebsmotors 350 die eingeschätzte Temperatur des Antriebsmotors 350 verwenden. Diese ungefähre und/oder eingeschätzte Betriebstemperatur kann mittels der Haltebremse 360 ermittelt werden. Da eine unmittelbare und unter direkter Messung des Wicklungswiderstands zwischen den einzelnen Phasen beim Antriebsmotor 350 schwierig ist, kann die Betriebstemperatur der Haltebremse 360 gemessen werden.

In einem Ausführungsbeispiel kann die Betriebstemperatur des Antriebsmotors 350 unmittelbar gemessen werden, beispielsweise unter Verwendung eines zusätzlichen Relais, das von den 400V weggeschaltet ist. Dies ist jedoch etwas umständlich und erfordert einen höheren Bauteilaufwand.

Anstelle der unmittelbar und/oder direkt gemessenen Betriebstemperatur kann eine eingeschätzte Betriebstemperatur als detektierte Prozessdaten verwendet werden, die mit Hilfe der Haltebremse 360 ermittelt wird. Handelsübliche Haltebremsen können zum Beispiel mit 24V betrieben werden. Der zum Betrieb der 24V-Haltebremse benötigte Strom ändert sich mit der Betriebstemperatur der Haltebremse 360. Dadurch kann durch ein Messen des benötigten Stroms der elektrischen Widerstand der Haltebremse 360 mittels des Ohm'schen Gesetzes ermittelt werden. Der elektrische Widerstand der Haltebremse ist temperaturabhängig. Die Betriebstemperatur der Haltebremse 360 entspricht im Wesentlichen der Betriebstemperatur des Antriebsmotors 350, da diese über die Bauteile im Inneren der Antriebsrolle 300 in Wärmeaustausch stehen.

Die Steuervorrichtung 1 kann zudem dazu ausgebildet sein, beim Anhalten der Waren und/oder Transportgüter 250 eine Gegenbestromung als Steuersignale an die Antriebsmotoren 350 anzulegen. Dies kann insbesondere dann sinnvoll sein, wenn die Antriebsrolle keine Haltebremse aufweist und/oder auch keinen anderen Temperatursensor, über den die Betriebstemperatur des Antriebsmotors 350 detektiert und/oder eingeschätzt werden kann. In diesem Fall kann der Prozessor 10 eine Gegenbestromung an den Antriebsmotor 350 anlegen, um das Transportgut 250 möglichst unmittelbar anzuhalten und/oder zu stoppen. Die Zeitdauer und/oder der Zeitraum der Gegenbestromung bzw. des Gegenbestromungsimpulses kann ein weiterer einstellbarer Parameter der Anhaltefunktion sein.

Die Steuervorrichtung kann einen Thermoschutz für jeden angetriebenen Antriebsmotor 350 aufweisen. Weiterhin kann die Steuervorrichtung 1 einen USB-Anschluss für Softwareupdates und/oder zum Programmieren des Prozessors 10 aufweisen. Die Steuervorrichtung kann weiterhin LEDs aufweisen um anzuzeigen, ob ein Fehler vorliegt bzw. welche Anschlüsse der Steuervorrichtung 1 belegt sind.

Die Steuervorrichtung 1 kann insbesondere dazu ausgelegt sein, mehrmals pro Sekunde die Steuersignale auszuwerten und/oder bereitzustellen, insbesondere mit 1000 Hz. Aus den aktuell am Prozessor 10 bereitgestellten Signalen kann der Prozessor 10 einen aktuelle Sollgeschwindigkeit und/oder Sollrichtung des jeweils angesteuerten Transportabschnitts 110, 120 bzw. 130 generieren.

Beim Ansteuern der Anhaltefunktion kann der Prozessor so ausgebildet werden, dass die Anhaltefunktion nicht wie in Figur 2 gezeigt eine glatte stufenlose Anhalterampe ist. Vielmehr kann der Prozessor die Anhalterampe während des Anhaltezeitraums ΔT_{A} in mehreren Stufen ansteuern, zum Beispiel in fünf bis zwanzig unterschiedlichen Stufen, die sich der dargestellten abfallenden Rampe annähern und diese nachbilden.

### Bezugszeichenliste

- 1: Steuervorrichtung
- 10: Prozessor
- 21: erster Steuerausgang
- 22: zweiter Steuerausgang
- 23: TRIAC für den ersten Steuerausgang
- 24: TRIAC für den zweiten Steuerausgang
- 25: Hallsensor für den ersten Steuerausgang
- 26: Hallsensor für den zweiten Steuerausgang
- 30: Versorgungseingang
- 31: erster Signaleingang
- 32: zweiter Signaleingang
- 41: erster NMOS
- 42: zweiter NMOS

- 100: Transportgutförderer
- 101: Rahmen
- 102: Rolle
- 103: Rolle mit Ausrichtelementen
- 104: Führungselement
- 110: erster Transportabschnitt
- 120: zweiter Transportabschnitt
- 130: dritter Transportabschnitt
- 150: Detektor

- 200: Palette
- 250: Transportgut

- 300: Antriebsrolle
- 310: Übertragungsbereich
- 320: Rollenmantel
- 321: erstes Rollenmantelende
- 322: zweites Rollenmantelende
- 330: stehende Welle
- 340: Anschlüsse
- 350: Antriebsmotor
- 360: Haltebremse

- F: Förderrrichtung
- M(t): angelegtes Drehmoment
- M_{B}: Betriebsdrehmoment
- Mi: Initialdrehmoment
- Mstart: Startdrehmoment
- Mₛₜₒₚₚ: Stoppdrehmoment
- R: Rotationsachse
- T: Periodendauer
- ΔT_{I}: Initialzeitraum
- ΔT_{A}: Anhaltezeitraum
- ΔT_{S}: Steigungszeitraum
- ΔT_{T}: Totzeit
- t₁ ... t₅: erster bis fünfter Zeitpunkt
- ϕ: Startphasenwinkel

## Patentansprüche

1. Steuervorrichtung (1) für einen Transportgutförderer (100) mit einem Prozessor (10), der Steuersignale für zumindest einen im Stop-and-Go-Betrieb betriebenen Antriebsmotor (350) eines Transportabschnitts (110; 120; 130) des Transportgutförderers (100) generiert; wobei
- der Prozessor (10) dazu konfiguriert ist, beim Anhalten des Transportabschnitts (110; 120; 130) des Transportgutförderers (100) den Antriebsmotor (350) so mittels eines Phasenanschnitts und/oder Phasenabschnitts anzusteuern, dass das vom Antriebsmotor (350) erzeugte Drehmoment (M(t)) gemäß einer einstellbaren Anhaltefunktion reduziert wird und
- der Prozessor (10) die Anhaltefunktion in Abhängigkeit von detektierten Prozessdaten des Transportabschnitts (110; 120; 130) einstellt, wobei die detektierten Prozessdaten Informationen über eine aktuelle Betriebstemperatur enthalten.

2. Steuervorrichtung nach Anspruch 1, wobei die Anhaltefunktion eine zeitabhängige Funktion des Drehmoments (M(t)) des Antriebsmotors (350) ist;
und/oder
wobei der Prozessor (10) einen Anhaltezeitraum (ΔT_{A}), über welchen das Drehmoment (M(t)) des Antriebsmotors (350) von einem Betriebsdrehmoment auf ein Anhaltedrehmoment reduziert wird, in Abhängigkeit von den detektierten Prozessdaten einstellt.

3. Steuervorrichtung nach einem der vorangehenden Ansprüche, wobei die detektierten Prozessdaten Informationen über ein Transportgutgewicht eines entlang des Transportgutförderers transportierten Transportguts (250) enthalten.

4. Steuervorrichtung nach einem der vorangehenden Ansprüche, wobei der Prozessor (10) beim Einstellen der Anhaltefunktion als Prozessdaten die Betriebstemperatur des Antriebsmotors (350) berücksichtigt.

5. Steuervorrichtung nach Anspruch 4, wobei der Prozessor (10) Steuersignale für den Antriebsmotor (350) einer Antriebsrolle (300) des Transportabschnitts (110; 120; 130) generiert und die Betriebstemperatur des Antriebsmotors (350) durch Ermittlung des temperaturabhängigen elektrischen Widerstands einer Haltebremse (360) der Antriebsrolle (300) bestimmt wird.

6. Steuervorrichtung nach Anspruch 5, wobei die Haltebremse (360) benachbart zum Antriebsmotor (350) auf einer stehenden Welle (330) der Antriebsrolle (300) angeordnet ist;
und/oder
wobei die Haltebremse (360) mit einer kleineren Betriebsspannung betrieben wird als der Antriebsmotor (350).

7. Steuervorrichtung nach einem der vorangehenden Ansprüche, wobei der Prozessor (10) beim Einstellen der Anhaltefunktion als Prozessdaten ein Transportgutgewicht eines auf dem Transportgutförderer geförderten Transportguts (250) berücksichtigt;
und/oder
wobei der Prozessor (10) dazu konfiguriert ist, Informationen über ein Transportgutgewicht eines auf dem Transportgutförderer geförderten Transportguts (250) aus der elektrischen Leistung zu ermitteln, welche beim Starten des Antriebsmotors (350) benötigt wird, um das Transportgut (250) auf eine Sollgeschwindigkeit zu beschleunigen.

8. Steuervorrichtung nach einem der vorangehenden Ansprüche, mit zumindest einem Sensordateneingang, über welchen der Prozessor die detektierte Prozessdaten des Transportgutförderers (100) zumindest teilweise erhält.

9. Steuervorrichtung nach einem der vorangehenden Ansprüche, mit zumindest einem Steuerausgang (21; 22) zum Ausgeben der Steuersignale an den zumindest einen Antriebsmotor (350) des Transportgutförderers(100).

10. Steuervorrichtung nach Anspruch 9, mit einem Versorgungseingang (30) für eine Versorgungsspannung mit zumindest einer Phase, wobei der Prozessor (10) die zumindest eine Phase der Versorgungsspannung so als Steuersignal am Steuerausgang (21; 22) bereitstellt, dass sie beim Starten und Anhalten des Antriebsmotors (350) mit einem Phasenanschnitt und/oder einem Phasenabschnitt versehen ist.

11. Steuervorrichtung nach Anspruch 10, wobei der Steuerausgang (21, 22) zweiteilig ausgebildet ist zum Ausgeben von zwei Steuersignalen zum Ansteuern zweier Antriebsmotoren (350) des Transportgutförderers (100), und wobei der Prozessor (10) die beiden Steuersignale aus derselben Versorgungsspannung generiert, welche am Versorgungseingang (30) anliegt.

12. Steuervorrichtung nach einem der vorangehenden Ansprüche, mit zumindest einem Signaleingang (31; 32), über welchen Eingangssignale an den Prozessor (10) übermittelbar sind, wobei die Eingangssignale Informationen über Startzeitpunkte und Anhaltezeitpunkte des zumindest einen Antriebsmotors (350) enthalten; und wobei der Prozessor (10) dazu konfiguriert ist, an den übermittelten Startzeitpunkten und Anhaltezeitpunkten die Steuersignale für den zumindest einen Antriebsmotor (350) so zu generieren, dass der Antriebsmotor (350) mittels eines Phasenanschnitts und/oder Phasenabschnitts gestartet und angehalten wird;
und/oder
wobei der Prozessor (10) Steuersignale für den Antriebsmotor (350) eines Palettenförderers (100) als Transportgutförderer generiert.

13. Transportgutförderer (100) mit zumindest einem Transportabschnitt (110; 120; 130), welcher von zumindest einem Antriebsmotor (350) angetrieben wird, und einer Steuervorrichtung (1) nach einem der vorangehenden Ansprüche, wobei die Steuervorrichtung (1) vom Prozessor (10) der Steuervorrichtung (1) generierte Steuersignale an den zumindest einen Antriebsmotor (350) ausgibt.

14. Transportgutförderer nach Anspruch 13, mit einem Temperatursensor zum detektieren der Betriebstemperatur des zumindest einen Antriebsmotors (350), wobei der Temperatursensor Informationen über die detektierte Betriebstemperatur dem Prozessor (10) der Steuervorrichtung (1) als Prozessdaten bereitstellt.

15. Verfahren zum Steuern eines Transportgutförderers (100), wobei:
- zumindest ein Antriebsmotor (350) eines Transportabschnitts (110; 120; 130) des Transportgutförderers (100) in einem Stop-and-Go-Betrieb betrieben wird;
- Prozessdaten des Transportabschnitts (110; 120; 130) detektiert und bereitgestellt werden, wobei die detektierten Prozessdaten Informationen über eine aktuelle Betriebstemperatur enthalten;
- beim Anhalten des Transportabschnitts (110; 120; 130) des Transportgutförderers (100) der zumindest eine Antriebsmotor (350) so mittels eines Phasenanschnitts und/oder Phasenabschnitts angesteuert wird, dass das vom Antriebsmotor (350) erzeugte Drehmoment (M(t)) gemäß einer einstellbaren Anhaltefunktion reduziert wird; und
- die Anhaltefunktion in Abhängigkeit von den detektierten Prozessdaten eingestellt wird.

## Claims

1. Control device (1) for a conveyor for transporting products conveyor for transporting products (100) having a processor (10) which generates control signals for at least one drive motor (350), operated in stop-and-go mode, of a transport section (110; 120; 130) of the conveyor for transporting products (100); wherein
- the processor (10) is configured, when stopping the transport section (110; 120; 130) of the conveyor for transporting products (100), to control the drive motor (350) by means of a phase-cut on and/or phase-cut off in such a manner that the torque (M(t)) generated by the drive motor (350) is reduced in accordance with an adjustable stop function, and
- the processor(10) adjusts the stop function in dependence on detected process data of the transport section (110; 120; 130) wherein the detected process data comprise information about a current operating temperature.

2. Control device according to claim 1, wherein the stop function is a time-dependent function of the torque (M(t)) of the drive motor (350);
and/or
wherein the processor (10) adjusts a stopping period (/1TA), during which the torque (M(t)) of the drive motor (350) is reduced from an operating torque to a stopping torque, in dependence on the detected process data.

3. Control device according to any one of the preceding claims, wherein the detected process data include information about a transported product weight of a transported product (250) transported along the conveyor for transporting products.

4. Control device according to any one of the preceding claims, wherein the processor (10), when adjusting the stop function, takes into consideration as process data the operating temperature of the drive motor (350).

5. Control device according to claim 4, wherein the processor (10) generates control signals for the drive motor (350) of a drive roller (300) of the transport section (110; 120; 130), and the operating temperature of the drive motor (350) is determined by establishing the temperature-dependent electrical resistance of a holding brake (360) of the drive roller (300).

6. Control device according to claim 5, wherein the holding brake (360) is arranged adjacent to the drive motor (350) on a stationary shaft (330) of the drive roller (300);
and/or
wherein the holding brake (360) is operated with a smaller operating voltage than the drive motor (350).

7. Control device according to any one of the preceding claims, wherein the processor (10), when adjusting the stop function, takes into consideration as process data a transported product weight of a transported product (250) conveyed on the conveyor for transporting products;
and/or
wherein the processor (10) is configured to determine information about a transported product weight of a transported product (250) conveyed on the conveyor for transporting products from the electrical power that is required on start-up of the drive motor (350) to accelerate the transported product (250) to a desired speed.

8. Control device according to any one of the preceding claims, having at least one sensor data input via which the processor receives at least some of the detected process data of the conveyor for transporting products (100).

9. Control device according to any one of the preceding claims, having at least one control output (21; 22) for outputting the control signals to the at least one drive motor (350) of the conveyor for transporting products (100).

10. Control device according to claim 9, having a supply input (30) for a supply voltage with at least one phase, wherein the processor (10) provides the at least one phase of the supply voltage as control signal at the control output (21; 22) such that, on start-up and stopping of the drive motor (350), it is provided with a phase-cut on and/or a phase-cut off.

11. Control device according to claim 10, wherein the control output (21, 22) is configured in two parts for outputting two control signals for controlling two drive motors (350) of the conveyor for transporting products (100), and wherein the processor (10) generates the two control signals from the same supply voltage which is present at the supply input (30).

12. Control device according to any one of the preceding claims, having at least one signal input (31; 32) *via* which input signals can be transmitted to the processor (10), wherein the input signals include information about start times and stop times of the at least one drive motor (350); and wherein the processor (10) is configured to generate the control signals for the at least one drive motor (350) at the transmitted start times and stop times in such a way that the drive motor (350) is started and stopped by means of a phase-cut on and/or phase-cut off;
and/or
wherein the processor (10) generates control signals for the drive motor (350) of a pallet conveyor (100) as the conveyor for transporting products.

13. Conveyer for transporting products (100) having at least one transport section (110; 120; 130) which is driven by at least one drive motor (350), and a control device (1) according to any one of the preceding claims, wherein the control device (1) outputs control signals generated by the processor (10) of the control device (1) to the at least one drive motor (350).

14. Conveyer for transporting products according to claim 13, having a temperature sensor for detecting the operating temperature of the at least one drive motor (350), wherein the temperature sensor provides information about the detected operating temperature as process data to the processor (10) of the control device (1).

15. Method for controlling a conveyor for transporting products (100), wherein:
- at least one drive motor (350) of a transport section (110; 120; 130) of the conveyor for transporting products (100) is operated in a stop-and-go mode;
- process data of the transport section (110; 120; 130) are detected and provided, wherein the detected process data comprise information about a current operating temperature;
- on stopping of the transport section (110; 120; 130) of the conveyor for transporting products (100), the at least one drive motor (350) is controlled by means of a phase-cut on and/or phase-cut off in such a way that the torque (M(t)) generated by the drive motor (350) is reduced in accordance with an adjustable stop function; and
- the stop function is adjusted in dependence on the detected process data.

## Revendications

1. Dispositif de commande (1) pour un convoyeur de produits à transporter (100), comprenant un processeur (10) qui génère des signaux de commande pour au moins un moteur d'entraînement (350) fonctionnant en mode marche/arrêt d'une section de transport (110 ; 120 ; 130) du convoyeur de produits à transporter (100) ; dans lequel
- lorsque la section de transport (110; 120; 130) du convoyeur de produits à transporter (100) est arrêtée, le processeur (10) est configuré pour piloter le moteur d'entraînement (350) au moyen d'une coupure de début de phase et/ou d'une coupure de fin de phase de telle sorte que le couple (M(t)) produit par le moteur d'entraînement (350) est réduit selon une fonction d'arrêt réglable, et
- le processeur (10) règle la fonction d'arrêt en fonction de données de processus détectées de la section de transport (110 ; 120 ; 130), les données de processus détectées contenant des informations concernant une température de fonctionnement actuelle.

2. Dispositif de commande selon la revendication 1, dans lequel la fonction d'arrêt est une fonction dépendant du temps du couple (M(t)) du moteur d'entraînement (350) ;
et/ou
le processeur (10) réglant en fonction des données de processus détectées une période d'arrêt (ΔT_{A}) pendant laquelle le couple (M(t)) du moteur d'entraînement (350) est réduit d'un couple de fonctionnement à un couple d'arrêt.

3. Dispositif de commande selon l'une quelconque des revendications précédentes, dans lequel les données de processus détectées contiennent des informations concernant un poids de produit à transporter d'un produit à transporter (250) transporté le long du convoyeur de produits à transporter.

4. Dispositif de commande selon l'une quelconque des revendications précédentes, dans lequel, lors du réglage de la fonction d'arrêt, le processeur (10) tient compte de la température de fonctionnement du moteur d'entraînement (350) en tant que données de processus.

5. Dispositif de commande selon la revendication 4, dans lequel le processeur (10) génère des signaux de commande pour le moteur d'entraînement (350) d'un galet d'entraînement (300) de la section de transport (110 ; 120 ; 130), et la température de fonctionnement du moteur d'entraînement (350) est déterminée par l'établissement d'une résistance électrique dépendante de la température d'un frein d'arrêt (360) du galet d'entraînement (300).

6. Dispositif de commande selon la revendication 5, dans lequel le frein d'arrêt (360) est disposé à proximité du moteur d'entraînement (350) sur un arbre stationnaire (330) du galet d'entraînement (300) ;
et/ou
dans lequel le frein d'arrêt (360) fonctionne avec une tension de fonctionnement inférieure à celle du moteur d'entraînement (350).

7. Dispositif de commande selon l'une quelconque des revendications précédentes, dans lequel, lors du réglage de la fonction d'arrêt, le processeur (10) tient compte en tant que données de processus d'un poids de produit à transporter d'un produit à transporter (250) convoyé sur le convoyeur de produits à transporter ;
et/ou
dans lequel le processeur (10) est configuré pour établir des informations concernant un poids de produit à transporter d'un produit à transporter (250) convoyé sur le convoyeur de produits à transporter à partir de la puissance électrique qui est nécessaire au démarrage du moteur d'entraînement (350) afin d'accélérer le produit à transporter (250) jusqu'à une vitesse de consigne.

8. Dispositif de commande selon l'une quelconque des revendications précédentes, comprenant au moins une entrée de données de capteur par laquelle le processeur reçoit au moins partiellement les données de processus détectées du convoyeur de produits à transporter (100).

9. Dispositif de commande selon l'une quelconque des revendications précédentes, comprenant au moins une sortie de commande (21 ; 22) pour sortir les signaux de commande audit au moins un moteur d'entraînement (350) du convoyeur de produits à transporter (100).

10. Dispositif de commande selon la revendication 9, comprenant une entrée d'alimentation (30) pour une tension d'alimentation avec au moins une phase, le processeur (10) fournissant ladite au moins une phase de la tension d'alimentation comme signal de commande à la sortie de commande (21 ; 22) de telle sorte qu'au démarrage et à l'arrêt du moteur d'entraînement (350) elle soit pourvue d'une coupure de début de phase et/ou d'une coupure de fin de phase.

11. Dispositif de commande selon la revendication 10, dans lequel la sortie de commande (21, 22) est réalisée en deux parties pour sortir deux signaux de commande permettant de piloter deux moteurs d'entraînement (350) du convoyeur de produits à transporter (100), et le processeur (10) générant les deux signaux de commande à partir de la même tension d'alimentation appliquée à l'entrée d'alimentation (30).

12. Dispositif de commande selon l'une quelconque des revendications précédentes, comprenant au moins une entrée de signal (31 ; 32) par laquelle des signaux d'entrée peuvent être transmis au processeur (10), les signaux d'entrée contenant des informations concernant des temps de démarrage et des temps d'arrêt du au moins un moteur d'entraînement (350) ; et le processeur (10) étant configuré pour générer aux temps de démarrage et aux temps d'arrêt transmis les signaux de commande pour ledit au moins un moteur d'entraînement (350) de telle sorte que le moteur d'entraînement (350) est démarré et ou arrêté au moyen d'une coupure de début de phase et/ou d'une coupure de fin de phase ;
et/ou
le processeur (10) générant des signaux de commande pour le moteur d'entraînement (350) d'un convoyeur de palettes (100) en tant que convoyeur de produits à transporter.

13. Convoyeur de produits à transporter (100) comprenant au moins une section de transport (110 ; 120 ; 130) qui est entraînée par au moins un moteur d'entraînement (350), et un dispositif de commande (1) selon l'une quelconque des revendications précédentes, dans lequel le dispositif de commande (1) fournit audit au moins un moteur d'entraînement (350) des signaux de commande générés par le processeur (10) du dispositif de commande (1).

14. Convoyeur de produits à transporter selon la revendication 13, comprenant un capteur de température pour détecter la température de fonctionnement du au moins un moteur d'entraînement (350), le capteur de température fournissant au processeur (10) du dispositif de commande (1) des informations concernant la température de fonctionnement détectée en tant que données de processus.

15. Procédé de commande d'un convoyeur de produits à transporter (100), dans lequel :
- au moins un moteur d'entraînement (350) d'une section de transport (110 ; 120 ; 130) du convoyeur de produits à transporter (100) fonctionne en mode marche/arrêt ;
- des données de processus de la section de transport (110 ; 120 ; 130) sont détectées et fournies, les données de processus détectées contenant des informations concernant une température de fonctionnement actuelle ;
- lorsque la section de transport (110 ; 120 ; 130) du convoyeur de produits à transporter (100) est arrêtée, ledit au moins un moteur d'entraînement (350) est piloté au moyen d'une coupure de début de phase et/ou d'une coupure de fin de phase de telle sorte que le couple (M(t)) produit par le moteur d'entraînement (350) est réduit selon une fonction d'arrêt réglable ; et
- la fonction d'arrêt est réglée en fonction des données de processus détectées.
